# EUROPEAN PATENT SPECIFICATION

(11) **EP 1 705 351 B1**
(45) Date of publication and mention of the grant of the patent: **12.01.2011**
(21) Application number: 06006015.9
(22) Date of filing: 23.03.2006
(51) Int. Cl.: F02B 23/08

(54) **Control apparatus of multi-cylinder engine**
Steuervorrichtung einer Mehrzylinderbrennkraftmaschine
Dispositif de contrôle d'un moteur multicylindre

(30) Priority: 23.03.2005 JP 2005083660; 23.03.2005 JP 2005083659
(43) Date of publication of application: 27.09.2006
(73) Proprietor: Mazda Motor Corporation, Aki-gun, Hiroshima 730-8670 (JP)
(72) Inventor: Wasada, Mitsunori c/o Mazda Motor Corporation, Aki-gun Hiroshima 730-8670 (JP); Iwata, Noriyuki c/o Mazda Motor Corporation, Aki-gun Hiroshima 730-8670 (JP); Sasaki, Junsou c/o Mazda Motor Corporation, Aki-gun Hiroshima 730-8670 (JP); Watanabe, Kazutoyo c/o Mazda Motor Corporation, Aki-gun Hiroshima 730-8670 (JP); Inatomi, Hiroshi, Honjo-shi Saitama 367-0055 (JP)
(74) Representative: Müller-Boré & Partner Patentanwälte

(56) References cited:
- DE-A1- 10 240 913
- DE-A1- 10 336 603
- JP-A- 4 166 624
- JP-A- 11 107 718
- JP-A- 61 016 256
- JP-A- 63 094 023
- US-A- 4 932 378
- US-A1- 2001 032 600
- US-B1- 6 422 184
- HOLGER FINDEISEN ET AL: "Development of an Actuator for a Fast Moving Flap for Impulse Charging" SAE TECHNICAL PAPER SERIES, SOCIETY OF AUTOMOTIVE ENGINEERS, WARRENDALE, PA, US, [Online] vol. 2003-01-0402, 1 January 2003 (2003-01-01), XP007905956 ISSN: 0148-7191 Retrieved from the Internet: URL:www.sae.org>
- PETER KREUTER ET AL: "An Impulse Charging System for SI and Diesel Engines" SAE TECHNICAL PAPER SERIES, SOCIETY OF AUTOMOTIVE ENGINEERS, WARRENDALE, PA, US, vol. 2002-01-1104, 1 January 2002 (2002-01-01), XP007905957 ISSN: 0148-7191

## Description

The present invention relates generally to a control apparatus of a multi-cylinder engine and, more particularly, to a control apparatus of a multi-cylinder engine provided with an impulse charger that generates or charges a highpressure impulse or the air pressure impulse in each cylinder each cycle.

Various techniques for improving engine volumetric efficiency have conventionally been developed for use in a control apparatus of a multi-cylinder engine which is provided with an intake manifold having a built-in surge tank connected to intake ports of individual cylinders by branching channels, or runners, of the intake manifold.

Following references are Japanese laid open Patent publications (JP) or works (Non-JP) with respect to the control apparatus relates to the present invention.
JP1: JP No.2000-248946 (US Patent No. 6,422,184)
Non-JP1: "Impulse charging boosts torque at low speed," in European Automotive Design, Findlay Publications Co. Ltd., February, 2004
Non-JP2: "Development of an Actuator for a Fast Moving Flap for Impulse Charging," paper in European Automotive Design, Findlay Publications Co. Ltd. January, 2003.

For example, Non-JP1 introduces a technique for increasing torque in a lower speed range by impulse charging. An impulse charger or an impulse charger described in Non-JP1 is provided with a solenoid valve disposed at an intermediate of each runner of an intake manifold so that the solenoid valve, which is electro magnetically controlled to move along a runner direction, is closed at a halfway point in each intake stroke each cycle to develop a vacuum (negative pressure) in a cylinder and is opened just before a piston in the cylinder reaches a bottom-center (BC) of the intake stroke to rapidly draw the air into the cylinder.

Other conventional arrangements for accomplishing impulse charging are described in JP1 and Non-JP1. According to these publications, a flap valve is used as a principal element of an impulse charger which charges the air pressure impulse.

To achieve improved output performance of an engine while providing reduced fuel consumption, it requires quick on/off switching of the impulse charger, so as to reduce the pumping loss and to maintain a sufficient volumetric efficiency in a well-balanced fashion. In the aforementioned pulse generators of the prior arts, however, it has been impossible to achieve the desired level of such quick response because of the nature of the conventional flow control valve (i.e., the solenoid or flap valve) which should be open and close against an intake the air pressure.

US-A-4 932 378 discloses an intake system for internal combustion engines comprising rotary type control valves provided in the intake passages and the bypass passages for inertia supercharging.

DE 103 36 603 A1 discloses a method of operating an internal combustion engine comprising control members which are provided in an intake passage of said engine. A volume of the intake passage provided between the control member and the combustion chamber is vented during a closing period of the control valve.

In light of the aforementioned drawback of the prior art, it is an object of the present invention to provide a control apparatus of a multi-cylinder engine capable of activating and deactivating an impulse charger with a quick response, yet maintaining a proper balance between fuel economy and output performance of the engine.

To overcome the drawback of the prior art, a control apparatus of a multi-cylinder engine of the present invention is provided with intake ducts which supply the air through individual intake ports to a plurality of cylinders, a collection member to which inlets of the branching ducts are collected to be in fluid communication with each other, an impulse charger which charges the impulse in each cylinder at halfway points in each intake stroke during each intake valve is opening the corresponding intake port, engine speed detecting means which detects engine speed, engine load detecting means which detects engine load conditions, an interconnection passageway which is positioned at a downstream of the impulse charger and is so connected to the intake ducts as to interconnect the intake ducts with each other, a valve mechanism which alternately opens and closes a joint channel which interconnects the interconnection passageway with the intake ducts, and a control means which controls operation of the impulse charger and the valve mechanism based on detections by the engine speed and engine load detecting means. In this control apparatus of the multi-cylinder engine, the control means closes the valve mechanism to disconnect the interconnection passageway from the intake ducts when the engine is in a high-load region and opens the valve mechanism to interconnect the interconnection passageway with the intake ducts when the engine is in a part-load region under engine driving conditions where a range of the engine speed is a level at which the impulse charger is pre-programmed to be operated. In this structure, when the engine is in a full-load operating range at an engine speed in which the impulse charger is pre-programmed to operate (mainly in low- to medium-speed ranges), the control means closes the valve mechanism to disconnect the interconnection passageway from the branching ducts. As a result, the impulse charged by the Impulse charger propagates into the each cylinder each cycle so that cylinder vaporization of fuel is accelerated and volumetric efficiency of the engine is improved, making it possible to obtain a high engine torque. In the part-load region, on the other hand, the control means opens the valve mechanism to connect the interconnection passageway with the branching ducts, so that the impulse charged by the impulse charger propagates to the branching ducts by way of the interconnection passageway so as to attenuate the impulse charged by the impulse charger. Since the impulse charger is substantially deactivated in this way, it is possible to quickly reduce pumping loss and improve fuel economy. Accordingly, because the impulse charger can be activated and deactivated with a quick response by connecting and disconnecting the interconnection passageway to and from the intake ducts, the control apparatus of a multi-cylinder engine of the present invention is advantageous in that the apparatus provides a capable of maintaining a proper balance between fuel economy and output performance of the engine.

In one aspect of the present invention, the control apparatus of the multi-cylinder engine further includes an EGR system by which a fraction of exhaust gases is recycled (EGR) from an exhaust channel to the each cylinder each cycle under the control of the control means. In this structure, the interconnection passageway is preferably constituted of an EGR channel of the EGR system. In addition, the control means preferably operates the EGR system to recycle exhaust through the intake ducts when the engine is at the part-load region. Consequently, in an EGR operating range in which priority is given to fuel economy rather than to an improvement in volumetric efficiency (and therefore in engine torque) by the impulse charger, the impulse charger is substantially deactivated and the EGR system is operated, making it possible to reduce pumping loss and improve emissions characteristics of engine by EGR.

In another aspect of the present invention, the EGR channel is preferably a plurality of separate EGR channels connected to the branching ducts. In addition, the valve mechanism is a single EGR valve which alternately opens and closes inlets of the separate EGR channels at the same time. In this case, the aforementioned valve mechanism is a single EGR valve which alternately opens and closes inlets of the separate EGR channel. Accordingly, the each of separate EGR channels works as a small-dimensional independent passageway, making it possible to prevent the occurrence of pulsation among the individual cylinders.

In another aspect of the present invention, when the interconnection passageway is closed, the valve mechanism also disconnects those cylinders from each other in which combustion sequence is in immediate one another. Accordingly, when the valve mechanism closes the interconnection passageway, none of the each cylinder each intake stroke is connected to any of the cylinders of which intake valves are open. For this reason, no attenuation of the impulse charged by the impulse charger could occur when the engine is in an operating range in which the impulse charger should be kept activated. Accordingly, this arrangement improves volumetric efficiency by operating the impulse charger in a reliable fashion when the valve mechanism is closed.

In the control apparatus of the engine with the aforementioned arrangement, in which the valve mechanism disconnects those cylinders in which combustion sequence is in immediate one another when the interconnection passageway is closed, it is preferable to employ the interconnection passageway which is made up of the EGR channel of EGR system and the control means which operates the EGR system so as to recycle the exhaust gas through the intake ducts at the part-load region. In this case, in the EGR operating range in which priority is given to fuel economy rather than to an improvement in the volumetric efficiency (and therefore in engine torque) by the impulse charger, the impulse charger is substantially deactivated and the EGR system is operated, making it possible to reduce pumping loss and improve emissions characteristics of engine by EGR. Meanwhile, in the operating range in which the impulse charger should be kept activated, the exhaust gas is recycled to none of the each cylinder each intake stroke. Accordingly, it is possible to achieve an improvement in the volumetric efficiency in a reliable fashion when the valve mechanism is closed.

In another aspect of the present invention, the impulse charger is preferably made up of a rotary valve which is accommodated within the collection member and rotates in synchronism with a crankshaft. Accordingly, the rotary valve as the impulse charger rotates in synchronism with the crankshaft, so that the impulse charger can charge the impulse reliably tuned to a resonance frequency in each of the cylinders with desired timing. Additionally, the impulse charger which charges the impulse can be installed without jeopardizing an effect of the dynamic supercharging achieved by the provision of the collection member.

In another aspect of the present invention, the outer diameter of the rotary valve is preferably set larger than the opening size of the each intake duct. It is also preferable to arrange the inlets of the branching ducts to face openings formed in an outer curving wall of the rotary valve so as to selectively on and off the air flows through the corresponding openings. Additionally, the percent of single intake duct volume or ratio to single-displaced cylinder volume, which is measured from an outlet of the corresponding intake port to one of the corresponding openings in the rotary valve, is preferably set within a range of 70% to 130%. Accordingly, the rotary valve as the impulse charger rotates in synchronism with the crankshaft, so that the impulse charger can charge the impulse reliably tuned to the resonance frequency in each of the cylinders with desired timing. Also, since the outer diameter of the rotary valve is set larger than the opening size of the each intake duct, it is possible to quickly switch the intake ducts to on/off flows with a high rotating speed of the rotary valve and thereby charging the strong impulse. Further, the rotary valve is mounted at a position where the percent of single intake duct volume from outlet of the corresponding intake port to the corresponding opening in the rotary valve falls within the range of 70% to 130%. The inventors have found this range of the percent of single intake duct volume or ratio to the single-displaced cylinder volume through an intensive study based on simulations. As discussed in detail in this Specification, it is possible to improve the volumetric efficiency of the engine by about 90% or more at the medium-speed range. In this Specification, the percent of single intake duct volume defined by the ratio to the single-displaced cylinder volume is referred to as "percent of single intake duct volume" (%SIDV). Even if the %SIDV exceeds 130%, the volumetric efficiency of the engine is not always being affected. However, since each intake duct becomes longer in this case, a general tendency of the engine is to exhibit a slower response to a demand for acceleration. Therefore, if the %SIDV exceeds 130%, it may become impossible to provide an increased engine torque under transient conditions during acceleration even if the engine torque under normal running conditions can be increased. On the contrary, if the %SIDV is lower than 70%, the supply of the air does not reach the necessary amount for each cylinder each cycle. Consequently, the volumetric efficiency of the engine drops despite the engine exhibits a faster response to the acceleration demand in this case. Under such circumstances, the %SIDV is set to the range of 70% to 130%. This increases not only the engine torque under normal running conditions but the engine torque under transient conditions during acceleration. It is to be pointed out that the aforementioned range of 70% to 130% is not intended to exclude a departure from this range due to measurement errors or variations in engine characteristics which are inevitable in carrying out the present invention.

According to the present invention, an intake duct length from an outlet of the corresponding intake port to the interconnection passageway is preferably set to a length which is determined by the intake duct volume defined by each intake passage from outlet of the corresponding intake port to the interconnection passageway and a single-displaced cylinder volume so that a natural frequency of air intake system is tuned to resonate at a high-speed range at which engine speed reaches at least first specified engine speed in order to achieve the inertial supercharging effect which enhances the volumetric efficiency within the high-speed range. An intake duct length from an outlet of the corresponding intake port to the collection member is set to a length which is determined by the intake duct volume defined by each intake passage from outlet of the corresponding intake port to the collection member and a single-displaced cylinder volume so that a natural frequency of air intake system is tuned to resonate at an medium-speed range at which engine speed is at most the first specified engine speed in order to achieve the inertial supercharging effect which enhances the volumetric efficiency at the medium-speed range. Additionally, the control means controls the valve mechanism to connect the interconnection passageway to the intake ducts at an engine speed at least the first specified engine speed and to hold the impulse charger activated in an operating range at most the second specified engine speed. Accordingly, it is possible, within the high-speed range at which the engine speed is at least the first specified engine speed, to achieve dynamic supercharging effect in the each passage between outlet of the corresponding intake port and the interconnection passageway when the interconnection passageway is in fluid communication with the corresponding intake duct, so that the volumetric efficiency can be improved at the high-speed range. The dynamic supercharging may either be inertial supercharging or resonant supercharging. The inertial supercharging effect is a dynamic effect which increases charging efficiency due to the impulse which is developed in each cylinder each intake stroke and is reflected by something such as a surge tank to the same cylinder in a latter part of the intake stroke. The resonant supercharging effect is also a dynamic effect which increases charging efficiency by the intake air pressure wave of the multiple cylinders resonate. The intake duct length of each cylinder can be shorter if it is set for the inertial supercharging compared to a case where the intake duct length is set for the resonant supercharging. Next, at the medium-speed range beyond the first specified engine speed up to the second specified engine speed, it is possible to achieve dynamic supercharging between outlet of the corresponding intake port and the aforementioned collection member by disconnecting the interconnection passageway from the intake ducts. Thus, the volumetric efficiency can be improved at the medium-speed range as well. Further, in a low-speed range lower than the second specified engine speed, it is possible to charge the impulse to the intake ducts by the impulse charger which is so activated as to retain the interconnection passageway from disconnecting the intake ducts under the low-speed range. Thus, the volumetric efficiency can be improved at the low-speed range. Accordingly, the present invention is utmost advantageous in that a desirable supercharging effect are achieved in all operating ranges and therefore the proper balance between fuel economy and output performance of the engine can be attained.

According to the present invention, the control means holds the impulse charger deactivated in an operating range at least the second specified engine speed. In other words, the impulse in this aspect of the present invention is not charged at the medium- and high-speed ranges. Accordingly, it makes possible to utilize the dynamic supercharging effect achieved by the equipment of interconnection passageway or the collection member through the intake ducts.

In still another aspect of the present invention, the control means causes the valve mechanism to open the joint channel to be in fluid communication the interconnection passageway with the intake ducts at the part-load region despite the engine speed is at most the second specified engine speed. Accordingly, at the wide open throttle region or the high-load region of the engine, the volumetric efficiency includes in high level due to the supercharging effect achieved by the impulse charger. Meanwhile, at the part-load region, the fuel economy develops by promptly opening the intake ducts to be in fluid communication with the interconnection passageway so that no impulse would be charged in each cylinder each cycle by the impulse charger. Because the interconnection passageway is made up of the interconnection channel which is in fluid communication with the each individual intake duct, the control apparatus promptly particularly increases cylinder pressure by the impulse charger. This reduces pumping loss caused by the impulse charger and improves fuel economy under part-load conditions at the low-speed range where a large engine torque is not required.

In yet another aspect of the present invention, the impulse charger includes a variable impulse charge timing mechanism which is capable of varying an impulse charging timing of the impulse charger, and the control means controls the variable impulse charge timing mechanism in such a manner that the further the engine speed approaches the second specified engine speed, the more the impulse charger would advance the impulse charging timing. Accordingly, the more engine speed approaches the second specified engine speed, the further the each opening timing of the impulse charger approaches in each intake valve opening timing each cycle. As the result, the more engine speed increases, the weaker progressively impulse charged by the impulse charger would be. This reduces pumping loss and improves fuel economy at higher engine speeds. Additionally, because the impulse charged by the impulse charger would be weaker with an increase in the engine speed, the enhanced dynamic supercharging effect (inertial supercharging or resonant supercharging) could be achieved by the intake ducts, so that a high cylinder volumetric efficiency could be maintained.

These and other objects, aspects and advantages of the present invention will become more apparent upon reading the following detailed description along with the accompanying drawings.
FIG. 1 is a right side view of a four-cycle multi-cylinder spark ignition engine according to a first embodiment of the present invention:
FIG. 2 is a cross-sectional view taken along lines A-A of FIG. 1;
FIG. 3 is a perspective view schematically showing a principal part of the embodiment of FIG. 1;
FIG. 4 is an enlarged cross-sectional view schematically showing a principal part of FIG. 2;
FIG. 5 is an enlarged fragmentary view showing a principal part of FIG. 1;
FIG. 6 is a block diagram of the engine of the embodiment of FIG. 1;
FIG. 7 is a graphical representation of torque generated by the engine, the phase of a rotary valve and on/off operation of valves of a variable induction system (VIS) in relation to engine speed;
FIG. 8 is a graph showing a relationship between engine torque and fuel consumption;
FIG. 9 is a first part of a flowchart showing the working of the engine of the embodiment of FIG. 1;
FIG. 10 is a second part of the flowchart showing the working of the engine of the embodiment of FIG. 1;
FIG. 11 is a graph showing a relationship between volumetric efficiency and engine speed obtained with cylinder samples having characteristics according to the embodiment of FIG. 1;
FIG. 12 is a graph showing a relationship between engine torque and engine speed of a four-cycle multi-cylinder spark ignition engine according to a second embodiment of the present invention;
FIG. 13 is a graph showing a relationship between the phase of the rotary valve and the engine torque together with a relationship between on/off operation of the VIS valves and the engine torque in a low-speed range of the engine;
FIGS. 14A and 14B are graphs showing sequence events of cylinder pressure and volume, and crank angle in cold-start and engine warm-up, respectively;
FIG. 15 is a first part of a flowchart showing the working of the engine of the second embodiment;
FIG. 16 is a second part of the flowchart showing the working of the engine of the second embodiment;
FIG. 17 is a third part of the flowchart showing the working of the engine of the second embodiment;
FIG. 18 is an enlarged fragmentary view showing a principal part of a four-cycle multi-cylinder spark ignition engine according to a third embodiment of the present invention;
FIG. 19 is a partially cutaway perspective view showing a specific construction of an EGR valve of the engine of the third embodiment;
FIGS. 20A and 20B are enlarged fragmentary cross-sectional views showing operation of the EGR valve;
FIG. 21 is a cross-sectional view of the EGR valve taken along lines A-A of FIG. 20A:
FIG. 22 is a graph showing a relationship between the engine torque and the engine speed obtained when an EGR system shown in FIGS. 18 to 21 is used; and
FIG. 23 is a flowchart showing the working of the engine of the third embodiment provided with the EGR system shown in FIGS. 18 to 21.

The present invention is now described with reference to preferred embodiments thereof which are illustrated in the accompanying drawings.

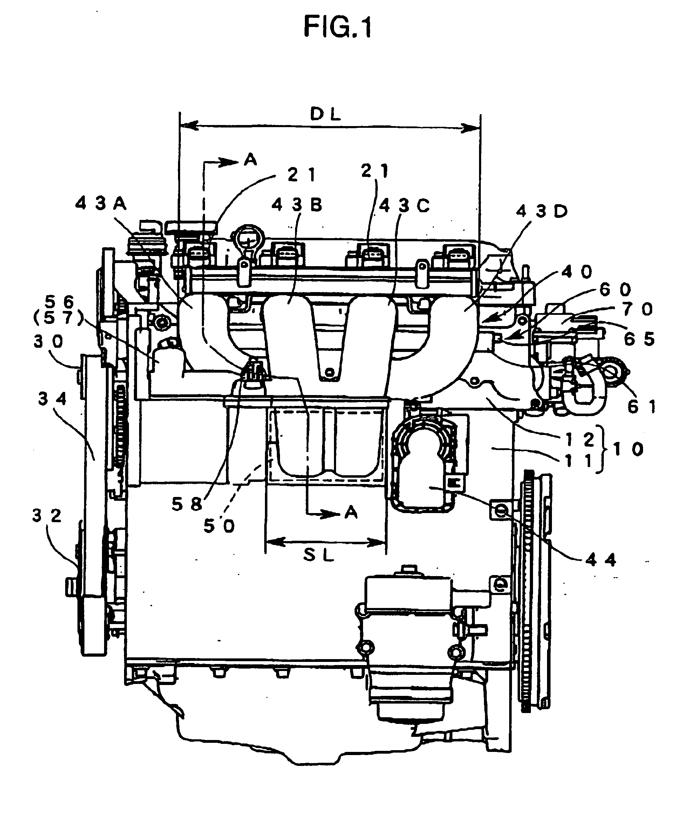

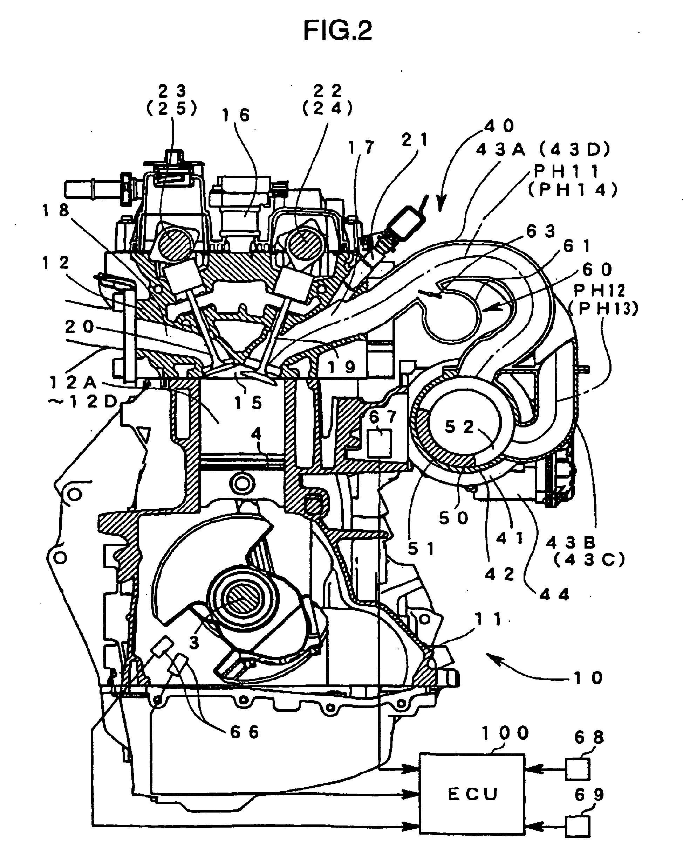

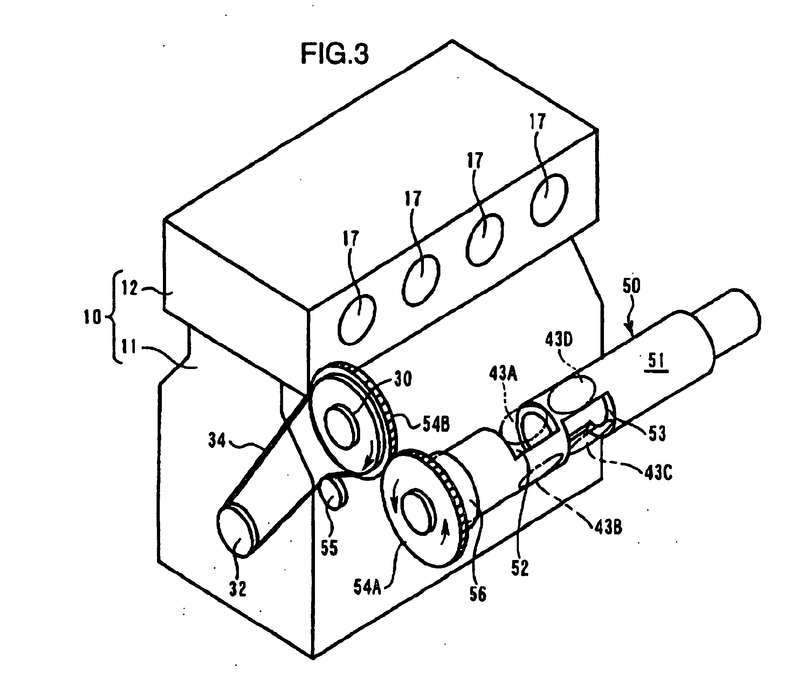

FIG. 1 is a right side view of a four-cycle multi-cylinder spark ignition engine 10 according to a first embodiment of the present invention. FIG. 2 is a cross-sectional view taken along lines A-A of FIG. 1, and FIG. 3 is a perspective view schematically showing a principal part of the embodiment.

Referring to FIGS. 1 to 3, the engine 10 includes a cylinder block 11 and a cylinder head 12 which are formed into a single structure, the cylinder head 12 positioned on top of the cylinder block 11. The engine 10 has first to fourth cylinders 12A-12D in which pistons 4 connected to a crankshaft 3 are fitted, forming a combustion chamber 15 above the piston 4 in each of the cylinders 12A-12D.

Spark plugs 16 are fixed in the cylinder head 12 in such a manner that tips of the spark plugs 16 are located within the combustion chambers 15 formed in the individual cylinders 12A-12D at the top thereof.

There are formed intake ports 17 and exhaust ports 18 which are in communication with the combustion chambers 15 of the individual cylinders 12A-12D in the cylinder head 12 with intake valves 19 and exhaust valves 20 provided in the intake ports 17 and the exhaust ports 18, respectively.

A fuel injector 21 including a needle valve and a solenoid is installed in each of the intake ports 17.

The exhaust ports 18 connect to an exhaust manifold which is not illustrated. Although not illustrated, a catalytic converter which converts the exhaust gas is provided within an exhaust passage downstream of a common collection point of ducts for the individual cylinders 12A-12D from the exhaust manifold. The catalytic converter employs a so-called three-way catalyst, for example, which exhibits extremely high conversion performance with respect to hydrocarbons (HC), carbon monoxide (CO) and nitrogen oxides (NOx) when the air/fuel ratio is almost equal to the stoichiometric air/fuel ratio (or excess air ratio λ-1).

The intake valves 19 and the exhaust valves 20 are actuated by camshafts 22 and 23 supported by the engine 10, respectively, such that the intake ports 17 and the exhaust ports 18 are opened and closed in a synchronized fashion with a specific phase delay from one cylinder to another. The camshafts 22 and 23 are linked to unillustrated cam sprocket gears which is driven by a timing belt (not shown) connected to a cam pulley 30. The cam pulley 30 is mounted rotatably about an axis parallel to the crankshaft 3 on a front side of the engine 10. Also, an output pulley 32 affixed to the crankshaft 3 is mounted on the front side of the engine 10, so that the two pulleys 30 and 32 are interlocked and driven in synchronism with each other.

The engine 10 is provided with variable impulse charge timing mechanisms 24 and 25 which vary opening and closing timings of the intake and exhaust valves 19 and 20 of the individual cylinders 12A-12D by regulating phases of rotation of the two camshafts 22 and 23. With this arrangement, the phases of the intake valves 19 can be varied with respect to crank angle.

An intake system 40 of the present embodiment includes an intake manifold 41 and a rotary valve 50 which serves as an impulse charger, or a pulse generating valve (PGV), built in the intake manifold 41.

The intake manifold 41 attached to the engine 10 by unillustrated supporting members includes as integral parts thereof a surge tank 42 serving as a collection member horizontally extending in a longitudinal direction of the engine 10 along which the individual cylinders 12A-12D are arranged as well as first to fourth branching intake ducts 43A-43D, each of which have separate intake passage PH11-PH14, branching off from the surge tank 42. A throttle body 44 attached to a rear end of the surge tank 42 incorporates a throttle valve which is not illustrated.

The surge tank 42 is a generally cylindrical part which is in communication with the individual branching intake ducts 43A-43D. The surge tank 42 serves to absorb pressure differences among the branching intake ducts 43A-43D and prevents abnormal engine noise and sensor malfunctions. In this embodiment, width SL of the surge tank 42 along a cylinder bank direction is made shorter than an overall width DL of the branching intake ducts 43A-43D at downstream ends thereof along the cylinder bank direction (see FIG. 1).

The branching intake ducts 43A-43D provided respectively for the first to fourth cylinders 12A-12D are curved in a generally L-shape. The each branching duct 43A (-43D) is interconnecting the corresponding cylinder 12A (-12D) with the surge tank 42. In the illustrated embodiment, each of the branching intake ducts 43A-43D has an equal intake passage PH11 (-PH14) from an outer curving surface 51 of the rotary valve 50 located within the surge tank 42 to each corresponding intake port 17 in this embodiment.

The rotary valve 50 is a hollow cylindrical member which is rotatably supported with an inner curving surface of the surge tank 42. An outer curving surface 51 of the rotary valve 50 does not contact with the inner curving surface of the surge tank 42 but the gaps are kept therebetween small to minimize leakage.

Referring to FIG. 3, there is provided an input gear 54A fixed to a forward end of the rotary valve 50 concentrically therewith. The input gear 54A is engaged with an output gear 54B which is disposed concentrically with the aforementioned cam pulley 30, so that torque from the crankshaft 3 is transmitted to the input gear 54A via the output gear 54B at a gear ratio of 1:0.5. This means that the rotary valve 50 is synchronized with the cam pulley 30 with a gear ratio of 1:1. In an outer curving wall of the rotary valve 50, there is formed a pair of openings 52 and 53 through which an inner space of the surge tank 42 is fluid in communication with the individual branching intake ducts 43A-43D. These openings 52 and 53 are separated along an axial direction of the rotary valve 50 and are offset in a circumferential direction thereof to create a phase difference of 180 degrees from each other. In rotating direction of the rotary valve 50, the front opening 52 takes leading position to the rear opening 53. Designated by the numeral 55 in FIG. 3 is an idler.

In the illustrated embodiment, there is provided a rotary valve advance mechanism 56 between the rotary valve 50 and the input gear 54A. The rotary valve advance mechanism 56 is essentially a mechanism for varying valve opening timing of the rotary valve 50 by creating a phase difference between the input gear 54A and the rotary valve 50 by use of a rotational phase control apparatus previously proposed by the Applicant of the present invention in Japanese Unexamined Patent Publication No. 1999-107718, or the like. Referring to FIG. 1, the rotary valve advance mechanism 56 is driven by an oil control valve (OCV) system 57 in a controlled fashion. Additionally, the rotary valve advance mechanism 56 is associated with an impulse generating valve PGV angle sensor 58 which detects the phase of the rotary valve 50 as shown in FIG. 1.

The engine 10 of this embodiment is an in-line four-cylinder engine of which first to fourth cylinders 12A-12D are arranged in this order from front to rear. Operating cycles of the cylinders 12A-12D are determined such that the first cylinder 12A, the third cylinder 12C, the fourth cylinder 12D and the second cylinder 12B sequentially go through respective intake strokes in this order. Assuming that a point in time when the first cylinder 12A goes into the intake stroke is a starting point, a sequence of successive strokes (intake, compression, expansion and exhaust) of the individual cylinders 12A-12D is as shown in Table 1 below.

**Table 1**

| **Cylinder No.** | **Strokes** | | | |
|---|---|---|---|---|
| 1st cylinder | Intake | Compression | Expansion | Exhaust |
| 2nd cylinder | Compression | Expansion | Exhaust | Intake |
| 3rd cylinder | Exhaust | Intake | Compression | Expansion |
| 4th cylinder | Expansion | Exhaust | Intake | Compression |

In this embodiment, the first and second branching intake ducts 43A and 43B are arranged such that inlets thereof can face the opening 52 in the rotary valve 50 with a specific phase difference so that the inlet of the first branching intake duct 43A is located on a downstream side while the inlet of the second branching intake duct 43B is located on an upstream side with respect to the rotating direction of the rotary valve 50. Similarly, the third and fourth branching intake ducts 43C and 43D are arranged such that inlets thereof can face the opening 53 formed in the rotary valve 50 with the same specific phase difference so that the inlet of the third branching intake duct 43C is located on the downstream side while the inlet of the fourth branching intake duct 43D is located on the upstream side with respect to the rotating direction of the rotary valve 50.

More specifically, the first branching intake duct 43A connected to the first cylinder 12A and the second branching intake duct 43B connected to the second cylinder 12B are joined to the surge tank 42 at positions where the inlets of the first and second branching intake ducts 43A and 438 can face the front opening 52 with a phase difference of 90 degrees and the inlet of the second branching intake duct 43B is located on the upstream side with respect to the rotating direction of the rotary valve 50. Also, the third branching intake duct 43C connected to the third cylinder 12C and the fourth branching intake duct 43D connected to the fourth cylinder 12D are faced to the rear opening 53 with a phase difference of 90 degrees so that the inlet of the third branching intake duct 43C is located on the upstream side with respect to the rotating direction of the rotary valve 50 and the first and fourth branching intake ducts 43A and 43D (and thus the second and third branching intake ducts 438 and 43C) are located in the same phase, that is, at the same angular position in a circumferential direction of the surge tank 42.

With the aforementioned arrangement, the first to fourth branching intake ducts 43A-43D can be on/off air flows with specific timing regardless the engine speed. This arrangement also serves to equalize the lengths of the individual branching intake ducts 43A-43D and reduce overall dimensions of the branching intake ducts 43A-43D. After all, the arrangement of the embodiment configures the air intake system featuring a quick response to a demand for torque acceleration with the shortest intake passage PH11-PH14. Also, as stated earlier, the width SL of the surge tank 42 along the cylinder bank direction is shorter than the overall width DL of the branching intake ducts 43A-43D at outlets thereof along the cylinder bank direction. On the other hand, the inlets of the branching intake ducts 43A-43D connected to the surge tank 42 are in closer proximity than outlets as can be seen from FIG. 1. This arrangement of the embodiment helps to provide an extremely high-speed response to the demand for acceleration of engine at the greatest extend.

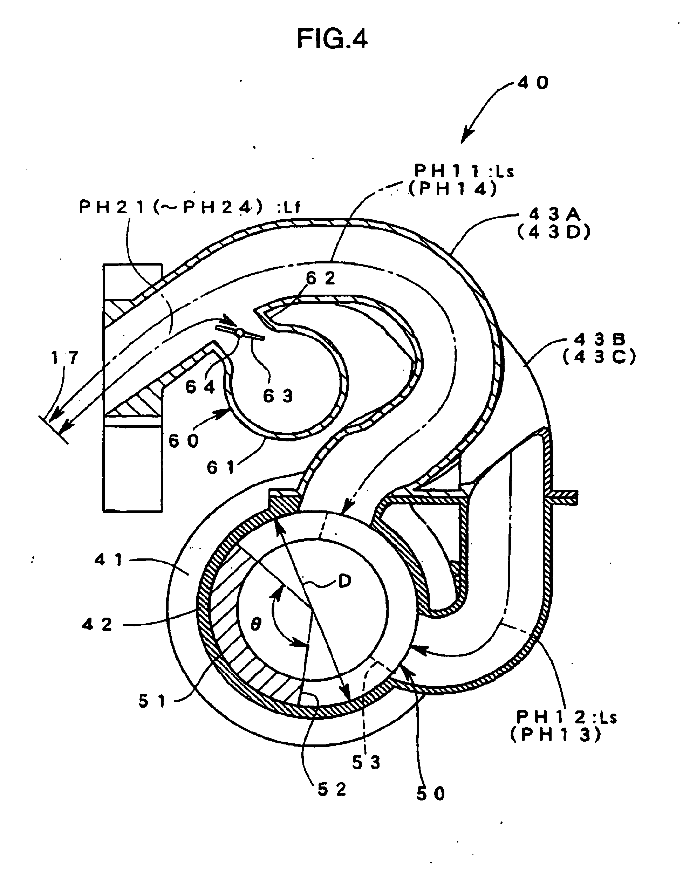

FIG. 4 is an enlarged cross-sectional view schematically showing a principal part of FIG. 2.

As shown in FIG. 4, the rotary valve 50 has an outer diameter D larger than the inner diameter of each of the branching intake ducts 43A-43D. Therefore, the branching intake ducts 43A-43D are caused in fluid communication with the corresponding openings 52 and 53 for shorter periods of time as the rotary valve 50 rotates in synchronism with the crankshaft 3. Also, since this intake system 40 is configured to draw in the air through the branching intake ducts 43A-43D when the openings 52 and 53 in the outer curving wall of the rotary valve 50 face the inlets of the corresponding branching intake ducts 43A-43D, the intake system 40 of the embodiment serves to prevent the air pulsation and reduce abnormal noise.

In this embodiment, has a valve closing angle θ between the two openings 52 and 53 is set to 120 degrees, for example. Thus, if the valve opening timing is set in an earlier half portion of each intake stroke, the surge tank 42 is also held disconnected from a particular cylinder by the rotary valve 50 even when the intake port 17 of that cylinder is opened by the pertinent intake valve 19. Therefore, a vacuum is generated in corresponding one of the branching intake ducts 43A-43D by the intake stroke of the pertinent cylinder until the rotary valve 50 opens an intake the air channel to the cylinder.

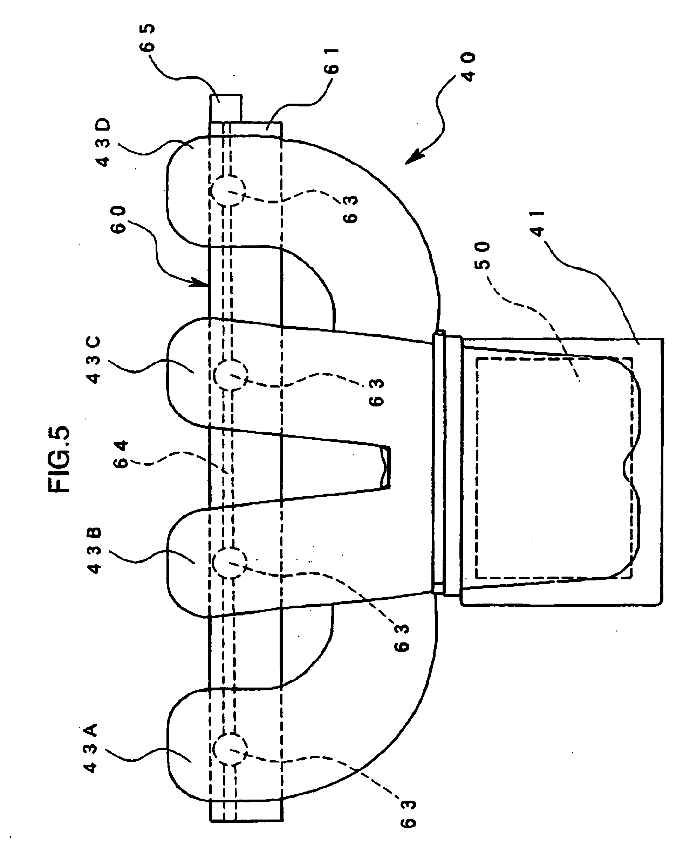

FIG. 5 is an enlarged fragmentary view showing a principal part of FIG. 1.

Referring to FIGS. 4 and 5, the branching intake ducts 43A-43D are associated with a variable induction system (VIS) 60 which works as an intake duct length varying system including the volume channel 61 serving as the air cavity portion extending parallel to the crankshaft 3, joint ducts 62 which connect the individual branching intake ducts 43A-43D to the volume channel 61, and VIS valves 63 serving as a valve mechanism for on/off flow control of the individual joint ducts 62. As illustrated in FIGS. 4 and 5, the volume channel 61 is a component which also serves as an interconnection passageway for interconnecting the individual branching intake ducts 43A-43D. The individual VIS valves 63 are mounted on a common drive shaft 64 to which a VIS valve actuator 65 is connected for simultaneously opening and closing the VIS valves 63.

Referring to FIG. 4, an intake duct length Lf from an outlet of the corresponding intake port 17 to the volume channel 61 is set to a length which is determined by the intake duct volume defined by each intake passage PH 21-24 from the outlet of the corresponding intake port 17 to the volume channel 61 and a single-displaced cylinder volume so that the a natural frequency of air intake system is tuned to resonate at a high-speed range R3 at which engine speed reaches at least a first specified engine speed Nf (e.g., 4500 rpm) in order to achieve the dynamic supercharging effect (inertial supercharging effect in this embodiment) which enhances the volumetric efficiency at the high-speed range R3. On the contrary, an intake duct length Ls from an outlet of the corresponding intake port 17 to the rotary valve 50 is set to a length which is determined by the intake duct volume defined by each intake passage PH 11-14 from the outlet of the corresponding intake port 17 to the rotary valve 50 and a single-displaced cylinder volume so that the a natural frequency of air intake system is tuned to resonate at an medium-speed range R2 at which engine speed reaches at most a second specified engine speed Ns (e.g., 3700 rpm) in order to achieve the dynamic supercharging effect (inertial supercharging effect in this embodiment) which enhances the volumetric efficiency at the medium-speed range R2. As a consequence, when the VIS valve actuator 65 opens the VIS valve 63, each of the branching intake ducts 43A-43D has a natural frequency corresponding to the first specified engine speed Nf, causing the intake air to oscillate at a resonance frequency and thereby producing an increased effect of inertial supercharging at the high-speed range R3. When the VIS valve actuator 65 closes the VIS valve 63, on the other hand, each of the branching intake ducts 43A-43D has a natural frequency corresponding to the second specified engine speed Ns, causing the intake air to oscillate at a resonance frequency and thereby producing an increased effect of inertial supercharging at the medium-speed range R2.

As shown in FIG. 2, the engine 10 is provided with a pair of crank angle sensors 66 serving as an engine speed sensor. The two crank angle sensors 66 are installed in a surrounding area of the crankshaft 3 with a specific phase difference from each other. The engine speed is detected based on a sensing signal output from one of the crank angle sensors 66. The rotating direction and angular position of the crankshaft 3 are detected based on sensing signals output from the two crank angle sensors 66. Additionally, the engine 10 is provided with an water temperature sensor 67 which detects the temperature of engine cooling water for judging operating conditions of the engine 10, an accelerator pedal position sensor 68 used as an engine load sensor, and an O₂ sensor 69 which detects the concentration of oxygen contained in exhaust gas discharged through the exhaust ports 18. The engine 10 is further provided with an exhaust gas recycled (EGR) system 70 by which the fraction of exhaust gases are recycled to the intake ports 17.

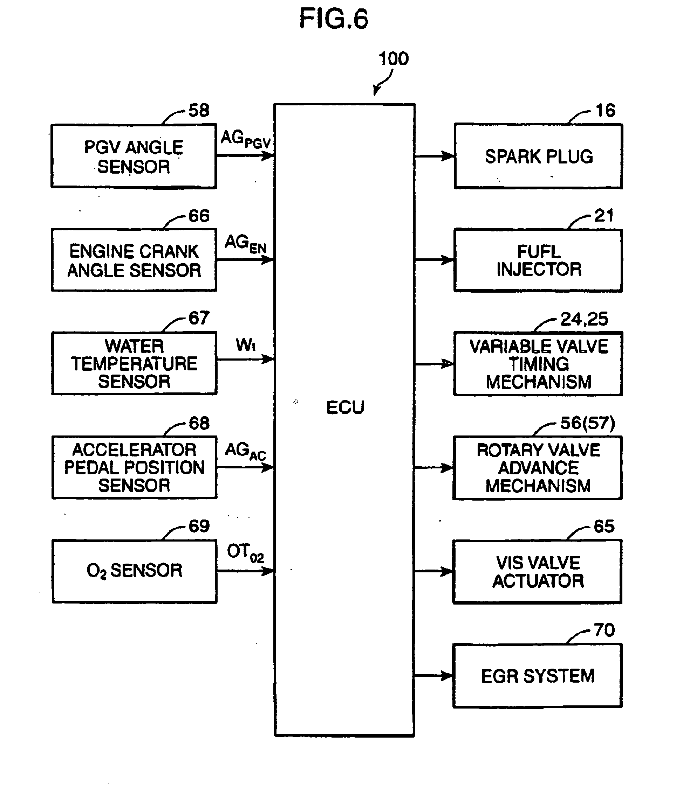

FIG. 6 is a block diagram of the engine 10 of the present embodiment.

Referring to FIG. 6, an electronic control unit (ECU) 100 including a microprocessor, a memory, and an input section and an output section performs overall control of the engine 10. Input devices connected to the input section of the ECU 100 are the PGV angle sensor 58 which detects the phase of the rotary valve 50, the crank angle sensor 66, the water temperature sensor 67, the accelerator pedal position sensor 68 and the O₂ sensor 69 or the like. ECU 100 receives various signals AG_{PGV}, AG_{EN}, Wt, AG_{AC}, and OT_{O2} from these sensors 58, 66, 67, 68, and 69 respectively. Output devices connected to the output section of the ECU 100 are the spark plugs 16, the fuel injectors 21, the variable impulse charge timing mechanisms 24, 25 for varying the opening and closing timings of the intake and exhaust valves 19 and 20, the rotary valve advance mechanism 56 (more specifically, the oil control valve system 57), the VIS valve actuator 65 and the EGR system 70 or the like.

Now, a control map stored in the memory of the ECU 100 is described.

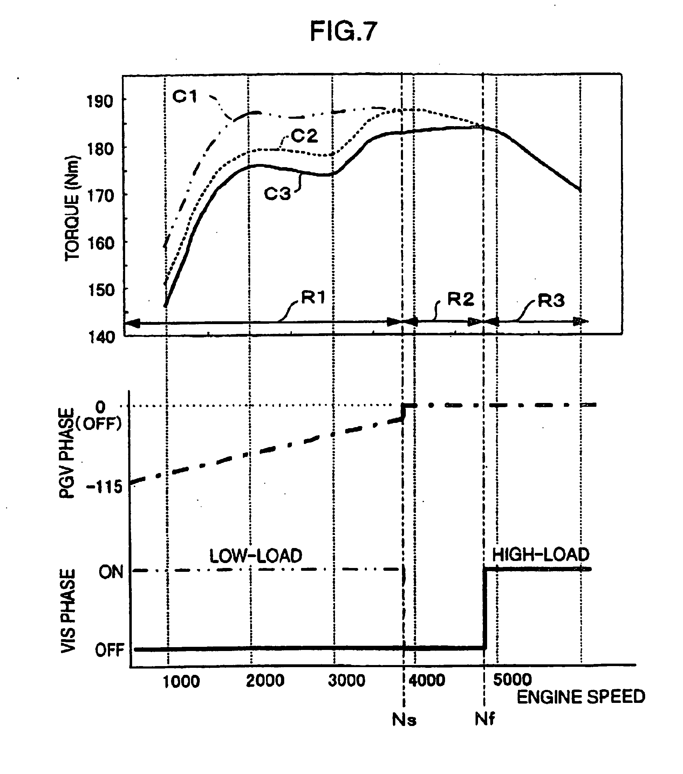

FIG. 7 is a graphical representation of torque generated by the engine 10, the phase of the rotary valve 50 and on/off operation of the VIS valves 63 in relation to the engine speed N.

Referring to FIG. 7, when the rotary valve 50 is used, output characteristics of the engine 10 are represented by a torque curve C1. When the VIS valves 63 are closed, or when the intake duct length of each of the branching intake ducts 43A-43D is Ls, the output characteristics of the engine 10 are represented by a torque curve C2. Further, when the VIS valves 63 are opened, or when the intake duct length of each of the branching intake ducts 43A-43D is Lf, the output characteristics of the engine 10 are represented by a torque curve C3. As shown in an upper graph of FIG. 7, R1 designates a low-speed range in which the engine 10 is supercharged by means of the rotary valve 50, R2 designates the earlier-mentioned medium-speed range in which the engine 10 is operated by inertial supercharging with the intake duct length set to Ls, and R3 designates the earlier-mentioned high-speed range in which the engine 10 is operated by inertial supercharging with the intake duct length set to Lf. The first specified engine speed Nf at which the VIS valves 63 are closed and the second specified engine speed Ns which is lower than the first specified engine speed Nf are determined from results of experiments conducted beforehand, and the control map as represented by FIG. 7 is designed based on the experimental results, for instance, and stored in the memory of the ECU 100.

In the above connection, it is to be pointed out that it is not always desirable to operate the rotary valve 50 at the low-speed range R1.

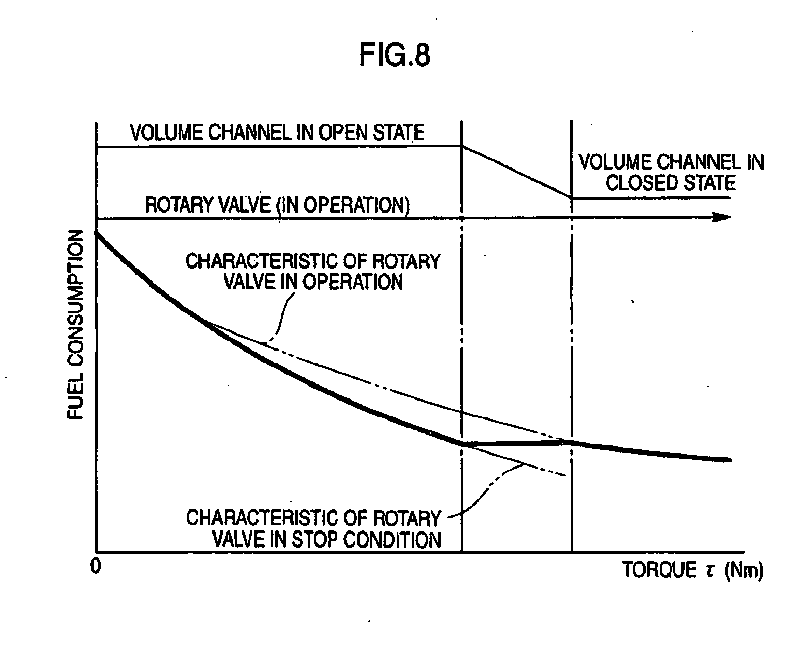

FIG. 8 is a graph showing a relationship between engine output (torque) and fuel consumption.

Referring to FIG. 8, when the engine 10 runs with the rotary valve 50 being in operation, pumping loss and therefore the fuel consumption increases compared to a case where the rotary valve 50 is not operated. For this reason, the ECU 100 is so programmed that the VIS valves 63 are opened in a part-load region even at the low-speed range R1 so as to improve the fuel economy while to achieve the supercharging effect by the rotary valve 50 only in a high-load region (wide open throttle region).

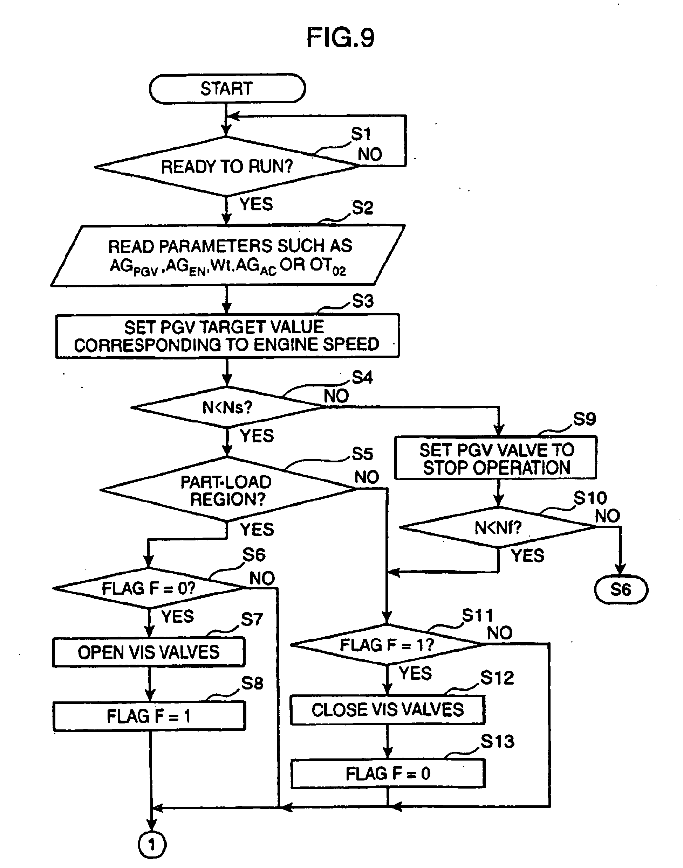

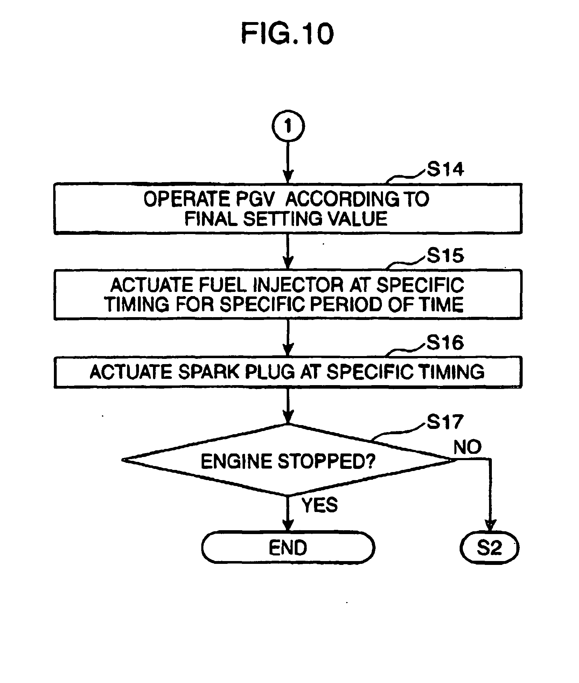

Control operation performed by the ECU 100 of the engine 10 of the present embodiment is now described with reference to a flowchart of FIGS. 9 and 10.

Referring to FIG. 9, immediately after the engine 10 is started (step S1), the ECU 100 reads AG_{PCV}, AG_{KM}, Wt, AG_{AC}, and OT_{O2} from the sensors 58, 66, 67, 68, and 69 connected to the input section of the ECU 100 (step S2).

Based on these sensing signal values, the ECU 100 sets a target value for the rotary valve 50 which works as the impulse generating valve (step S3). In this embodiment, the rotary valve 50 is set at a phase corresponding to a most advanced angular position (i.e., an OFF state) at engine start. The ECU 100 controls the oil control valve system 57 of the rotary valve advance mechanism 56 to determine the opening timing of the rotary valve 50 in this condition. As shown in FIG. 7, the rotary valve 50 is set such that the opening timing of the rotary valve 50 is most retarded with respect to opening timing of the intake valves 19 in lower speed regions and the opening timing of the rotary valve 50 is progressively advanced and approaches the opening timing of the intake valves 19 as the engine speed N increases.

Next, the ECU 100 determines whether the engine speed N has reached the second specified engine speed Ns (step S4). If the engine speed N is lower than the second specified engine speed Ns, the ECU 100 judges to the engine 10 at currently run at the low-speed range R1 and determines whether the engine 10 is at the part-load region based on an accelerator pedal position detected by the accelerator pedal position sensor 68 (step S5). If the engine 10 is currently at the part-load region, the ECU 100 makes reference to a flag F by which the VIS valves 63 are actuated (step S6). A domain of the flag F offers a choice between two values, that is, "0" for closing the VIS valves 63 and "1" for opening the VIS valves 63. If the value of the flag F is "0" in step S6, the ECU 100 opens the VIS valves 63 (step S7). An arrangement used in this embodiment, interrupting operation of the rotary valve 50 in step S7 is to interconnect the individual branching intake ducts 43A-43D through the volume channel 61 by opening the VIS valves 63, rather than to directly control the rotary valve advance mechanism 56. This arrangement attains a quick response to the engine acceleration demands compared the direct operations to stop the rotary valve 50 which exhibits great inertia and aerodynamic drag. With this arrangement of the embodiment, it is possible to cancel out the supercharging effect achieved by impulse charging by the rotary valve 50 and improve fuel economy in a timely fashion.

Subsequently, the ECU 100 switches the flag F to "1"

(step S8). If the value of the flag F is "1" in step S6, the ECU 100 proceeds to step S14 of FIG. 10.

If the engine speed N is judged to be at least the second specified engine speed Ns in step S4, the ECU 100 sets the rotary valve 50 to stop operating (step S9). This means that the opening timing of the rotary valve 50 is advanced such that the rotary valve 50 opens during the intake stroke when the engine speed N is judged to be at least the second specified engine speed Ns, as shown in FIG. 7 as well.

Subsequently, the ECU 100 determines whether the engine speed N is less than the first specified engine speed Nf (step S10). If the engine speed N is at least the first specified engine speed Nf, the ECU 100 judges to the engine 10 at currently run at the high-speed range R3 and proceeds to step S6. Therefore, at the high-speed range R3, the ECU 100 causes the VIS valves 63 to open and, as a consequence, the individual branching intake ducts 43A-43D are set to the shorter intake duct length Lf suitable for the high-speed range R3 so as to achieve an dynamic supercharging effect (inertial supercharging).

If the engine 10 at run is judged to be at the wide open throttle in step S5, or if the engine speed N is judged to be lower than the first specified engine speed Nf in step S10, the ECU 100 judges whether or not the value of the flag F is "1" (step S11). If the value of the flag F is "1", the ECU 100 causes the VIS valves 63 to close (step S12) and switches the flag F to "0" (step S13). Then, the ECU 100 proceeds to step S14 of FIG. 10. If the value of the flag F is "0", the ECU 100 proceeds directly to step S14 of FIG. 10.

Referring now to FIG. 10 which follows FIG. 9, the ECU 100 operates the rotary valve 50 according to a setting made in step S3 or S9 (step S14). If the rotary valve 50 is under the setting of step S9, the rotary valve 50 is substantially not in operation. Also, if the engine speed N is at least the first specified engine speed Nf, the VIS valves 63 are open and the rotary valve 50 is substantially not in operation regardless opening and closing timings thereof. Subsequently, the ECU 100 actuates each fuel injector 21 to inject fuel for a set period of time with specific timing (step S15). Further, the ECU 100 triggers each spark plug 16 to combust a mixture created in each combustion chamber 15 with specific timing (step S16). Then, if the engine 10 has stopped, the ECU 100 terminates the aforementioned sequence of the control operation, and if the engine 10 is in continued operation, the ECU 100 returns to step S2 and re-executes the sequence (step S17).

As previously mentioned, an interconnection passageway, which is so located as to interconnect the branching intake ducts 43A-43D with each other, is constituted by the variable induction system 60 which serves as an intake duct length varying system which changes the intake passage lengths Lf and Ls by switching the intake passages PH11-14 and PH21-24 from the outlet of corresponding intake port 17 to the surge tank 42. This arrangement of the embodiment attains a balance between the engine output and fuel consumption by combining dynamic supercharging effect achieved by activating and deactivating the rotary valve 50 and switching the intake duct lengths between Lf and Ls depending on the engine speed.

In particular, when the engine 10 runs at the high-speed range R3 at which the engine speed N is at least the first specified engine speed Nf, the VIS valves 63 of the variable induction system 60 are opened to connect the volume channel 61 with the branching intake ducts 43A-43D, so that the dynamic supercharging achieves between outlets of the intake ports 17 of the individual branching intake ducts 43A-43D and the volume channel 61. This improves the volumetric efficiency at the high-speed range R3. Also, when the engine 10 runs at the medium-speed range R2 at which the engine speed N is at least the second specified engine speed Ns but lower than the first specified engine speed Nf, the VIS valves 63 are closed to disconnect the volume channel 61, so that the dynamic supercharging achieves between outlets of the intake ports 17 of the individual branching intake ducts 43A-43D and the surge tank 42. This improves the volumetric efficiency at the medium-speed range R2. Further, when the engine 10 runs at the low-speed range R1 at which the engine speed N is lower than the second specified engine speed Ns, the rotary valve 50 is operated under conditions where the volume channel 61 is closed so as to charge the air pressure impulse in each branching intake duct 43A-43D each cycle. This improves the volumetric efficiency at the low-speed range R1.

In this embodiment, the ECU 100 is so programmed as to deactivate the rotary valve 50 at least the medium-speed range R2 between the first and second specified engine speeds Nf and Ns. Therefore, the impulse will not be charged at the medium- and high-speed ranges R2 and R3. This takes advantageous in that the inertial supercharging effect achieved by the provision of either the surge tank 42 or the volume channel 61 through the intake ducts.

In this embodiment, the volume channel 61 is constitutes an interconnection passageway which interconnects the individual branching intake ducts 43A-43D with each other. It is therefore possible to reliably switch the intake duct length by open and close action of the VIS valves 63 which connect and disconnect the volume channel 61 to and from the branching intake ducts 43A-43D. This takes advantage of the inertial supercharging effect through the individual branching intake ducts 43A-43D at the medium- and high-speed ranges R2 and R3.

The engine 10 of this embodiment is provided with the accelerator pedal position sensor 68 serving as the engine load sensor which detects engine load and entering the same to the ECU 100, whereby the ECU 100 connects the volume channel 61 to the branching intake ducts 43A-43D at the part-load region even when the engine speed N is lower than the second specified engine speed Ns. This attains a high volumetric efficiency at the wide open throttle or high-load region due to the supercharging effect achieved by the rotary valve 50, and at the same time, this improves fuel economy by connecting the volume channel 61 to the branching intake ducts 43A-43D to promptly terminate the impulse charging by the rotary valve 50 at the part-load region. Particularly because the volume channel 61 constitutes the interconnection passageway which is in interconnect the individual branching intake ducts 43A-43D with each other, the configuration of the embodiment promptly erases impulse effects by the rotary valve 50. This reduces pumping loss caused by the rotary valve 50 and improves fuel economy under part-load conditions at the low-speed range R1 where a large engine torque is not required.

The rotary valve 50 of this embodiment is provided with the rotary valve advance mechanism 56 which serves as a variable impulse charge timing mechanism for varying the opening timing of the rotary valve 50. The ECU 100 controls the rotary valve advance mechanism 56 to progressively advance the opening timing of the rotary valve 50 so that the opening timing of the rotary valve 50 approaches the opening timing of the intake valves 19 as the engine speed N approaches the second specified engine speed Ns. Since the opening timing of the rotary valve 50 approaches the opening timing of the intake valves 19 as the engine speed N approaches the second specified engine speed Ns, the impulse charged by the rotary valve 50 becomes progressively weaker as the engine speed N increases. This reduces pumping loss and improves fuel economy at higher engine speeds. Additionally, since the impulse charged by the rotary valve 50 becomes weaker with an increase in the engine speed N, the inertial supercharging effect achieved by the branching intake ducts 43A-43D is relatively enhanced, making it possible to maintain a high cylinder volumetric efficiency.

The impulse charger of this embodiment is made up of the rotary valve 50 which is accommodated in the surge tank 42 and rotates in synchronism with the crankshaft 3 of the engine 10. The impulse charger of the embodiment thus structured can charge the impulse reliably tuned to the resonance frequency in each of the cylinders 12A-12D with desired timing. Additionally, the rotary valve 50 which charges the impulse can be installed without jeopardizing the inertial supercharging effect achieved by the provision of either the surge tank 42 or the volume channel 61.

In this embodiment, the outer diameter D of the rotary valve 50 is set larger than the inner diameter of each branching intake duct 43A-43D, and the inlets of the individual branching intake ducts 43A-43D are arranged to face the corresponding openings 52 and 53 formed in the outer curving wall of the rotary valve 50 such that the branching intake ducts 43A-43D are switched to selectively on/off the air flows which would be through the corresponding openings 52 and 53. Also, the single intake duct volume from outlet of the corresponding intake port 17 to the opening 52 or 53 in the rotary valve 50 is within a range of 70% to 130% of the stroke volume (piston displacement) of each cylinder 12A-12D. This arrangement of the embodiment quickly switches the branching intake ducts 43A-43D to turn on/off the air flows with a high rotating speed of the rotary valve 50 and thereby creating a strong the air pressure impulse. Further, the rotary valve 50 is mounted at a position where the single intake duct volume from outlet of the corresponding intake port 17 to the opening 52 or 53 formed in the rotary valve 50 falls within the range of 70% to 130% of the single-displaced cylinder volume 12A-12D as stated above. The inventors have found this range of the percent of single intake duct volume (%SIDV) through an intensive study based on simulation. As will be further discussed, it is possible to improve the volumetric efficiency by about 90% or more at an engine speed of 3500 rpm, for instance.

Even if %SIDV from outlet of the corresponding intake port 17 to the opening 52 or 53 in the rotary valve 50 to the single-displaced cylinder volume 12A-12D, or the %SIDV, exceeds 130%, the volumetric efficiency is not always be affected. However, since each intake duct becomes longer in this case, a general tendency of the engine 10 is to exhibit a slower response to a demand for acceleration. Therefore, if the %SIDV exceeds 130%, it may become impossible to provide an increased engine torque under transient conditions during acceleration even if the engine torque under normal running conditions can be increased. On the contrary, if the %SIDV is lower than 70%, the supply of the air does not reach the necessary amount for each of the cylinders 12A-12D. Consequently, the volumetric efficiency drops although the engine 10 exhibits a faster response to the acceleration demand in this case. Under such circumstances, the %SIDV is set to the range of 70% to 130% in the present embodiment. This increases not only the engine torque under normal running conditions but also the engine torque under transient conditions during acceleration.

In this connection, a relationship between the piston displacement and the volumetric capacity of each intake duct is further discussed in the following.

In configuring the above-described intake system 40 of the embodiment, the inventors have performed simulation to study the relationship between the piston displacement and the volumetric capacity of an branching intake duct (runner) using samples of cylinders (T1 to T7) whose characteristics are as indicated in Table 2 below.

**Table 2**

| | **T1** | **T2** | **T3** | **T4** | **T5** | **T6** | **T7** |
|---|---|---|---|---|---|---|---|
| Intake channel length (mm) | 150 | 200 | 250 | 300 | 400 | 500 | 600 |
| Single-displaced cylinder volume Vh (cc) | 500 | 500 | 500 | 500 | 500 | 500 | 500 |
| Intake-channel-volume-to-piston-displacement percent (V/Vh) (%) | 59 | 71 | 84 | 96 | 122 | 147 | 172 |

The intake duct length shown in Table 2 is a total channel length including one each intake port 17 and branching intake duct (one of the branching intake ducts 43A-43D). More particularly, the intake duct length is the length from outlet of the corresponding intake port 17 opening into the combustion chamber 15 to one of the openings 52 and 53 formed in the rotary valve 50 (see FIG. 2). The piston displacement Vh is the volume of gas displaced by the piston 4 traveling from a BC to a top-center (TC), while the volumetric capacity of each intake duct, or the intake duct volume V, is the sum of the volumetric capacity of each intake port 17 formed in the cylinder head 12 and the volumetric capacity of each branching intake duct (one of the branching intake ducts 43A-43D).

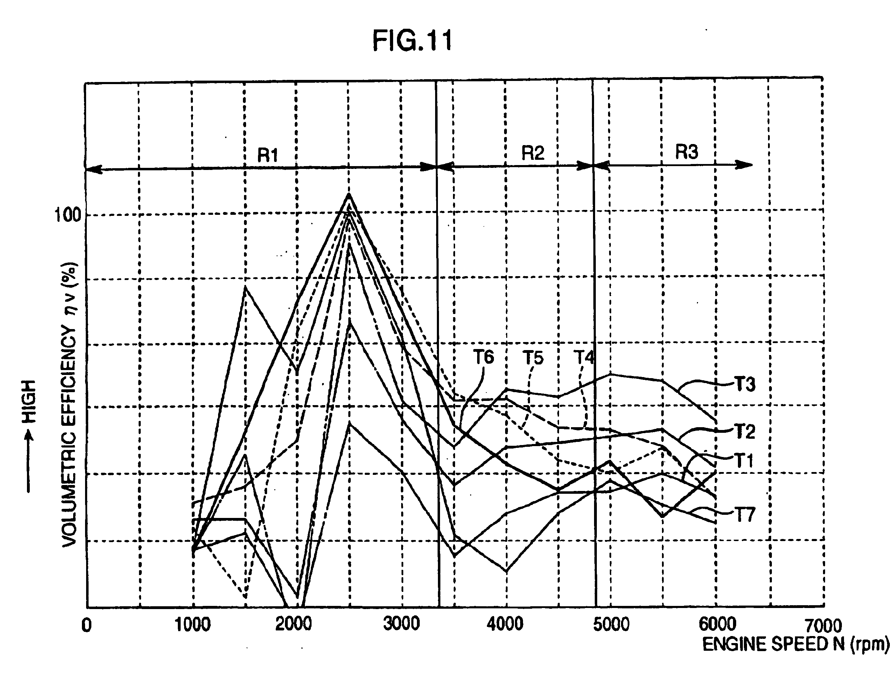

FIG. 11 is a graph showing a relationship between volumetric efficiency ηv and engine speed N obtained with cylinder samples T1 to T7 having the characteristics shown in Table 2.

Measurement results of FIG. 11 show maximum values of the volumetric efficiency ηv obtained when the intake valves 19 are held open or closed in a range of 50 degrees to 10 degrees in terms of crank angle (hereinafter referred to as CA) and in a range of 30 degrees CA to 70 degrees CA when the rotary valve 50 is opened at 115 degrees CA, wherein an intake duct length of 250 mm of sample T3 is used as a base length.

Referring to FIG. 11, if the %SIDV is lower than 70%, the volumetric efficiency ηv decreases as in the case of sample T1, especially at the engine speed of 3500 rpm. This is supposed by the fact that it is impossible to obtain a sufficient amount of the air despite the impulse charging effect achieved by the rotary valve 50 as the intake duct volume V is too small and that the volumetric efficiency ηv becomes peaky at the low-speed range R1 (at about 2500 rpm) and the high-speed range R3 (4500 to 5500 rpm) and sharply drops at the engine speed of 3500 rpm during impulse charging by the rotary valve 50. It has been found, on the other hand, that when the intake duct length is longer than the aforementioned base length of 250 mm, or when the %SIDV is at least 96%, the volumetric efficiency ηv becomes less peaky at the high-speed range R3 and, as a consequence, a drop in the volumetric efficiency ηv at 3500 rpm tends to become smaller even if the volumetric efficiency ηv increases at the low-speed range R1. If the intake duct length increases, however, engine response to a demand for increasing the amount of the air becomes slower so that the engine torque under transient conditions during acceleration may decrease. It has been ascertained from above that when the %SIDV is within the range of 70% to 130%, or when the intake duct length is 500 mm or less, it is possible to achieve high engine torque performance as well as a faster engine response not only under normal running conditions but under transient conditions.

As previously mentioned, the intake duct length Lf is set to a length which enables inertial supercharging at the high-speed range R3 and the intake duct length Ls is set to a length which enables inertial supercharging at the medium-speed range R2 in the foregoing embodiment. Since the individual intake duct lengths Lf and Ls can be made shorter in this embodiment, it is possible to configure a compact the air intake system.

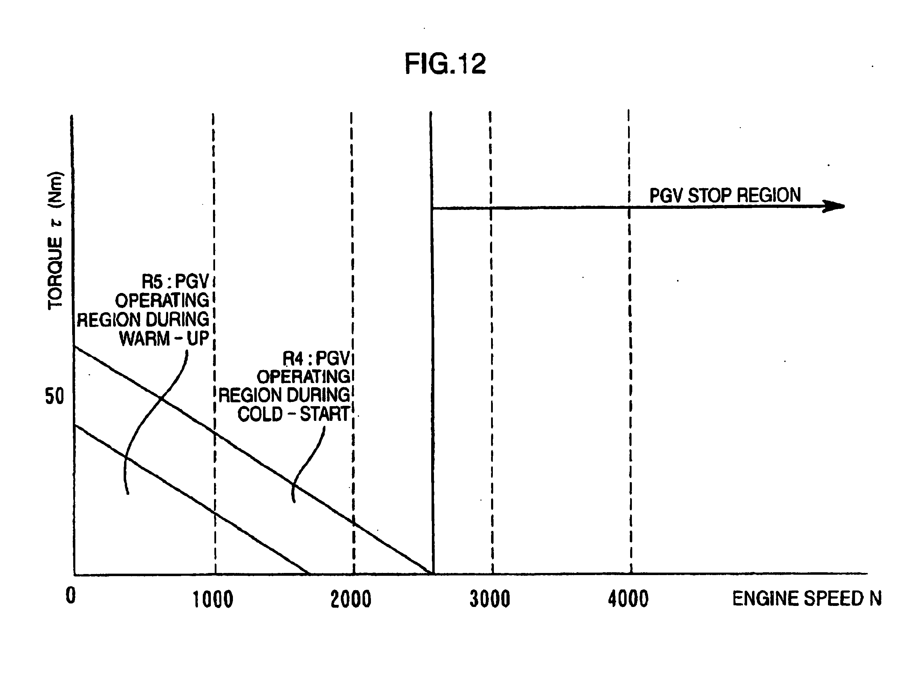

A four-cycle multi-cylinder spark ignition engine 10 employing a variable induction system (VIS) 60 according to a second embodiment of the present invention is now described with reference to FIGS. 12 through 17.

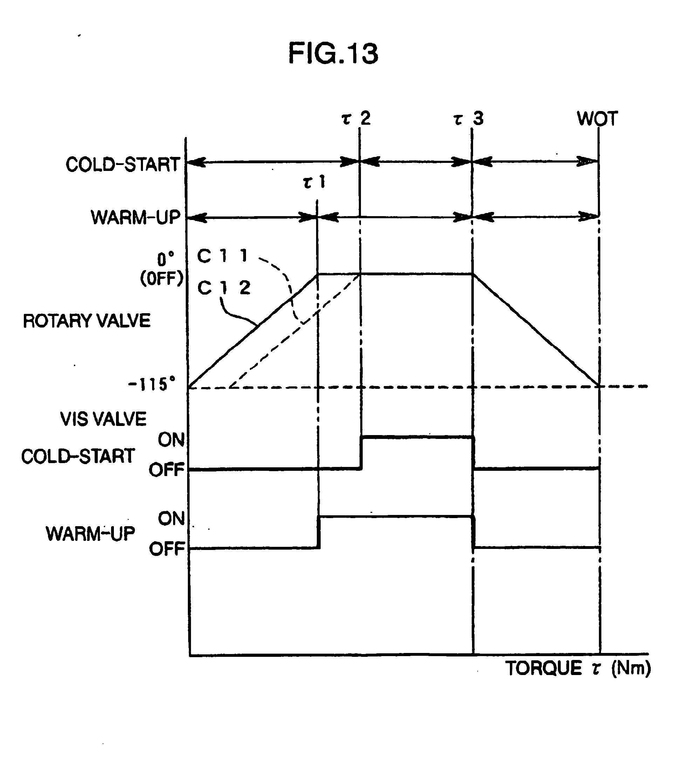

FIG. 12 is a graph showing a relationship between the engine torque and the engine speed, and FIG. 13 is a graph showing a relationship between the phase of the rotary valve 50 and the engine torque together with a relationship between on/off operation of the VIS valves 63 and the engine torque in a low-speed range of the engine 10.

Referring to FIGS. 12 and 13, the ECU 100 is programmed such that the temperature of the engine cooling water detected by the water temperature sensor 67 is taken as representing cylinder temperature of the engine 10, the engine 10 is judged to be in a cold-start when the temperature detected by the water temperature sensor 67 is lower than a preset cylinder temperature Wt1 while the engine 10 is judged to be warm-up when the temperature detected by the water temperature sensor 67 is at least the preset cylinder temperature Wt1, and an operating range R4 of the rotary valve 50 selected during cold-start (PGV operating range under cold-start) extends beyond an operating range R5 of the rotary valve 50 selected during warm-up (PGV operating range under warm-up) in this embodiment. As is apparent from FIG. 12, the operating range R5 of the rotary valve 50 selected in the engine warm-up is set to extend up to an engine speed N of approximately 1500 rpm, whereas the operating range R4 of the rotary valve 50 selected at engine cold-start is set to extend beyond the operating range R5 up to an engine speed N of approximately 2500 rpm depending on engine load conditions. Therefore, the variable induction system 60 is controlled such that the VIS valves 63 connect the volume channel 61 to the branching intake ducts 43A-43D at an engine torque τ2 during cold-start and at an engine torque τ1 during warm-up on a lower load side, where the torque τ2 is higher than the torque τ1.

As an arrangement for evaluating activeness of the catalytic converter, the ECU 100 is so programmed as to use the temperature Wt of the engine cooling water detected by the water temperature sensor 67 as a temperature for judging the activeness of the catalytic converter, and judges that the catalytic converter is in an inactive temperature state when the temperature Wt detected by the water temperature sensor 67 is lower than a preset cylinder temperature (inactive catalyst temperature) and that the catalytic converter is in an active temperature state when the temperature Wt detected by the water temperature sensor 67 is at least the preset cylinder temperature. Alternatively, the activeness of the catalytic converter may be judged based on a combination of the temperature Wt of the engine cooling water detected by the water temperature sensor 67 and time elapsed after engine start or by directing measuring the temperature of the catalytic converter.

In this embodiment, the operating range R5 in which the rotary valve 50 is operated is set even during warm-up as indicated in FIG. 12, so that the rotary valve 50 can be effectively used for accelerating vaporization and atomization of fuel and thereby improving combustion stability in addition to increasing engine torque.

As is apparent from FIG. 13, the VIS valves 63 are closed and the rotary valve 50 is operated on a higher load side (i.e., in a region of a torque τ3 and above) of the low-speed range of the engine 10. Accordingly, at a low-speed and low-load region at which great importance is placed on fuel evaporability and at a low-speed and high-load region at which high output performance of the engine 10 is required, the rotary valve 50 is operated to provide improved combustion stability and volumetric efficiency, whereas, at a low-speed and medium-load region at which such requirements are relatively less imposed, the VIS valves 63 are opened to obtain engine output while improving fuel economy by an dynamic supercharging effect through the branching intake ducts 43A-43D.

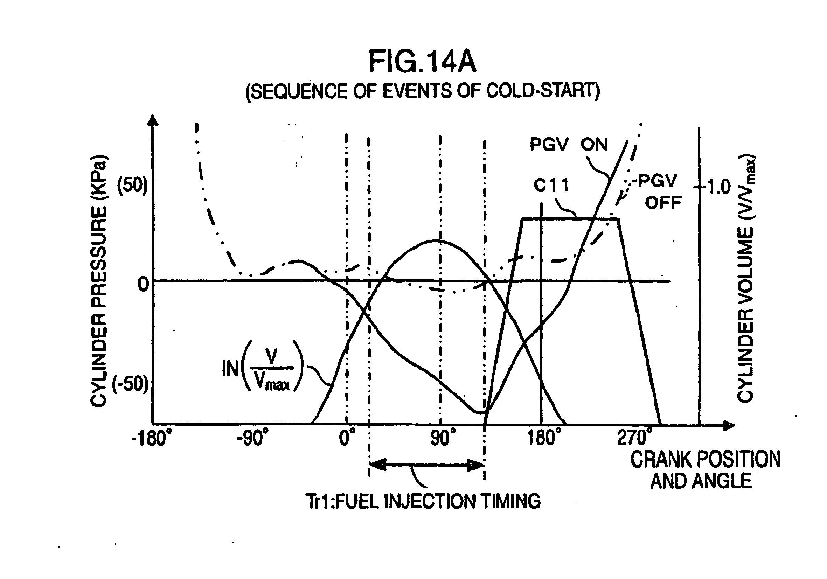

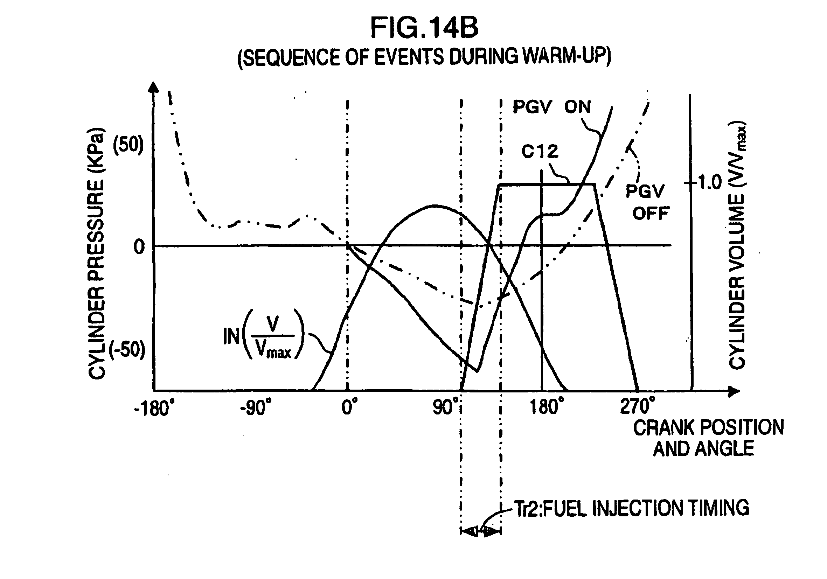

FIG. 14A is a graph showing a relationship between cylinder pressure and crank angle at engine cold-start, and FIG. 14B is a graph showing a relationship between cylinder pressure and crank angle in the engine warm-up. Designated by "C11" and "C12" in FIGS. 14A and 14B are on/off operations of the rotary valve 50 during cold-start and engine warm-up, respectively. In FIGS. 14A and 14B. "IN" designates characteristic of intake valves 19 which is also shown cylinder volume ratio V/Vₘₐₓ.

Referring to FIGS. 14A and 14B, the fuel injectors 21 are controlled to inject the fuel during a fuel injection period Tr1 during cold-start and during a fuel injection period Tr2 during warm-up in the present embodiment.

Specifically, the fuel injectors 21 are controlled to inject the fuel in an early part of each intake stroke before the rotary valve 50 opens when the engine 10 is during cold-start, and at about the opening timing (preferably immediately after the opening timing) of the rotary valve 50 when the engine 10 runs during warm-up.

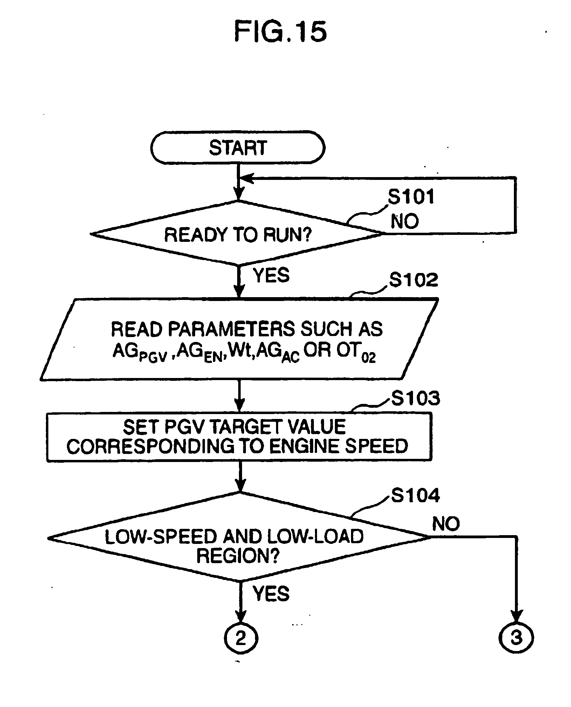

Control operation performed by the ECU 100 of the engine 10 of the present embodiment which is set to operate as shown in FIGS. 12 to 14A/14B is now described with reference to a flowchart of FIGS. 15 to 17.

As in the first embodiment discussed with reference to FIG. 9, the ECU 100 sets a target value for the rotary valve 50 upon engine start (steps S101, S102, S103) and, then, the ECU 100 judges whether the engine 10 is currently at the low-speed and low-load region (step S104) as shown in FIG. 15.

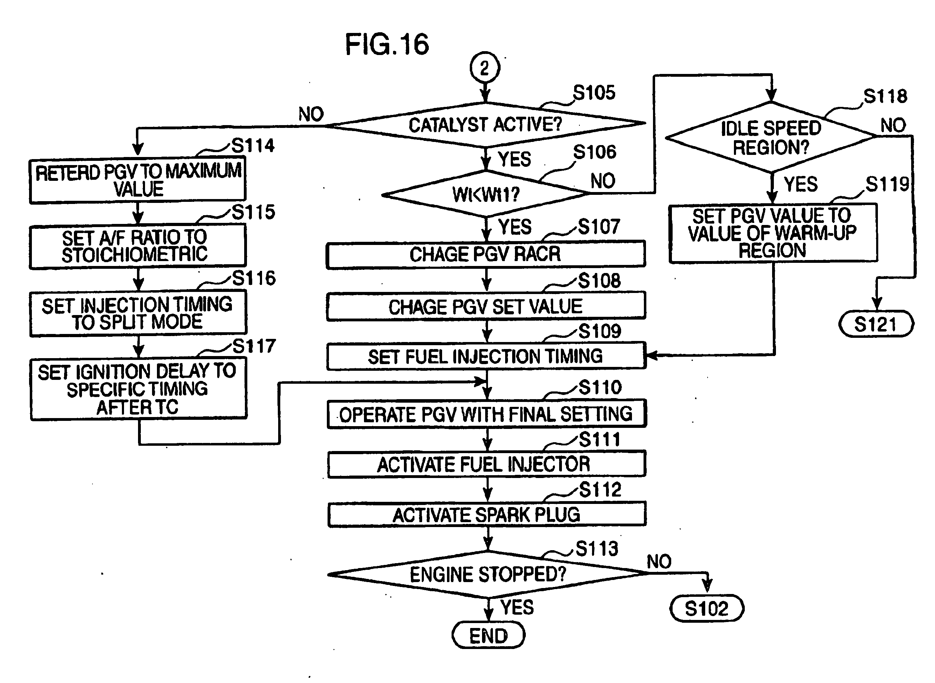

Referring to FIG. 16, if the engine 10 is judged to at currently run at the low-speed and low-load region, the ECU 100 evaluates the activeness of the catalytic converter (not shown) based on the sensing signal value of the water temperature sensor 67 which is used as a device for sensing the activity of the catalytic converter (step S105). If the catalytic converter is judged to have good activity, the ECU 100 judges whether the temperature Wt detected by the water temperature sensor 67 is lower than the preset cylinder temperature Wt1, that is, whether the engine 10 is during cold-start (step S106). If the engine 10 is judged to be currently during cold-start, the ECU 100 varies a retardation angle correction region (RACR) of the rotary valve 50 according to the detected temperature Wt (step S107), and further varies set values for the rotary valve 50 according to the detected temperature Wt (step S108). Steps S106 and S107 are performed based on a control map stored in the ECU 100 using data obtained from results of experiments conducted beforehand, for instance.

Then, based on a control map represented by the graphs of FIGS. 14A and 14B, the ECU 100 sets a fuel injection timing and period of time (step S109). Since the engine 10 is currently during cold-start, the ECU 100 sets the fuel injection period Tr1 for cold-start shown in FIG. 14A. In this condition, ignition timing is retarded in accordance with settings made in steps S109 and S110.

Then, the ECU 100 operates the rotary valve 50 in accordance with settings made in steps S107 and S108 (step S110). Subsequently, the ECU 100 causes the fuel injectors 21 to inject the fuel in accordance with the setting made in step S109 (step S111). Since the fuel is injected during the fuel injection period Tr1 for cold-start shown in FIG. 14A in this operation flow, fuel vaporization and atomization are accelerated by impulse charging by the rotary valve 50 during cold-start at which the engine 10 exhibits low combustion stability. This serves to improve overall combustion stability and emissions characteristics of engine.

After the fuel injection the air-fuel mixture which has been well mixed by the rotary valve 50 is ignited at a specified time to develop the engine torque (step S112).

After execution of spark ignition the ECU 100 returns to step S102 and re-executes the aforementioned sequence of the control operation until the engine 10 is stopped (step S113).

If the ECU 100 judges that activation of the catalytic converter is insufficient in step S105, the ECU 100 sets the opening timing of the rotary valve 50 to maximum retardation (step S114).

Subsequently, the ECU 100 sets the air/fuel ratio equal to the stoichiometric air/fuel ratio in order to improve emission characteristics (step S115). Next, the ECU 100 switches the engine 10 to a split fuel injection mode in which fuel injected by the fuel injectors 21 divided into two elements to create greater energy (step S116). Then, the ECU 100 sets the ignition delay to specific timing after compression TC (step S117), and proceeds to step S110 onward.

As a result of this operation flow, the rotary valve 50 opens with the maximum retardation from the opening timing of the intake valves 19 when step S110 is executed, so that a large negative pressure is created in each cylinder 12A-12D each intake stroke until the rotary valve 50 opens.

Also, when step S111 is executed with the setting made in step S116 above, the injected fuel metered to be the stoichiometric air/fuel ratio is divided into two elements each intake stroke.

Further, when step S112 is executed with the setting made in step S117 above, each spark plug 16 ignites the mixture under conditions where the ignition timing is much delayed. As a result, a relatively large amount of exhaust gas energy is created and the temperature of the catalytic converter rapidly increases, making it possible to activate the catalytic converter in a short time.

Next, if the cylinder temperature of the engine 10 reaches warm-up region in step S106 after the catalytic converter has been activated, the ECU 100 judges whether the engine speed N is currently at an idle speed range (step S118). If the engine speed N is at the idle speed range, the ECU 100 sets operating conditions of the rotary valve 50 in accordance with values of warm-up shown in FIGS. 12 and 13 (step S119). Upon completion of step S119, the ECU 100 proceeds to step S109.

Since the engine 10 is currently during warm-up, the ECU 100 sets the fuel injection period Tr2 for warm-up shown in FIG. 14B. In this condition, the ignition timing is advanced to a point close to the compression stroke TC.

Subsequently, the ECU 100 operates the rotary valve 50 under the operating conditions set for warm-up (step S110), causes the fuel injectors 21 to inject the fuel at a point immediately after the rotary valve 50 begins to open (step S111), and causes the fuel injectors 21 to ignite the mixture (step S112). Therefore, the fuel injected immediately before impulse charging is forced into the cylinders 12A-12D by a flow of intake the air. As a result, the fuel is efficiently introduced into the cylinders 12A-12D and well mixed with fresh the air, wherein the fresh the air is cooled by absorption of latent heat by vaporization of the fuel. Accordingly, even when the air/fuel ratio is increased to enrich the mixture under high-load conditions, it is possible to prevent the fuel from adhering to walls of the intake ducts and enhance a knocking avoidance effect achieved by the latent heat absorption.

If the engine speed N is judged to be exceeding the idle speed range in step S118, the ECU 100 proceeds to step S121 onward discussed below.

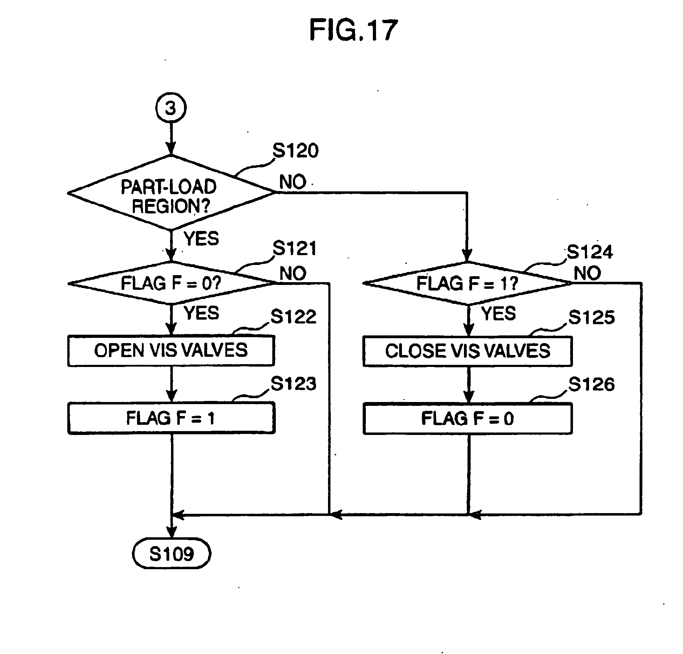

Referring to FIG. 17, if the engine 10 is judged to be currently not at the low-speed and low-load region in step S104 of FIG. 15, the ECU 100 determines whether the engine 10 is at the part-load region (step S120). If the engine 10 is judged to be currently at the part-load region, the ECU 100 makes reference to the flag F by which the VIS valves 63 are actuated (step S121). If the value of the flag F is "0" in step S121, the ECU 100 opens the VIS valves 63 (step S122) and switches the flag F to "1" (step S123). Then, the ECU 100 proceeds to step S109 of FIG. 16. If the value of the flag F is "1" in step S121, the ECU 100 proceeds directly to step S109 of FIG. 16.

If the engine 10 is judged to be currently at the wide open throttle, on the other hand, the ECU 100 judges whether the value of the flag F is "1" (step S124). If the value of the flag F is "1", the ECU 100 causes the VIS valves 63 to close (step S125) and switches the flag F to "0" (step S126). Then, the ECU 100 proceeds to step S109 of FIG. 16. If the value of the flag F is "0", the ECU 100 proceeds directly to step S109 of FIG. 16.

In this embodiment, if the engine 10 is in a medium-load region when the engine 10 is running at a low speed, that is, the low-speed and medium-load region, the rotary valve 50 is caused to stop operating. This reduces pumping loss caused by the rotary valve 50 and thereby improving fuel economy at the low-speed and medium-load region. At the low-speed and low-load region, on the other hand, a particularly large negative pressure is created in the intake ducts due to impulse charging by the rotary valve 50. This results in improved fuel evaporability and fuel-air mixability, serving thereby improving overall combustion stability and emissions characteristics of engine. Further, at the low-speed and high-load region, the volumetric efficiency includes in high level and improves output performance of the engine 10 due to impulse charging by the rotary valve 50.

In this embodiment, the engine 10 is provided with the water temperature sensor 67 used as the device for sensing the activity of the catalytic converter and the rotary valve 50 is operated in all load conditions until the ECU 100 detects that the catalytic converter has been activated. Until the catalytic converter is sufficiently activated after engine start, priority is given to emission characteristics rather than to fuel economy in this embodiment. Therefore, the rotary valve 50 is operated to charge the impulse and supercharge the engine 10 in such an operating condition regardless of engine load conditions. Consequently, a large negative pressure is created in the cylinders 12A-12D and fuel vaporization and atomization are accelerated, resulting in an improvement in combustion stability and emissions characteristics of engine, under conditions where the catalytic converter is not sufficiently activated.

In this embodiment, the engine 10 is provided with the water temperature sensor 67 used as a device which detects the cylinder temperature of the engine 10 and the ECU 100 operates the rotary valve 50 at the low-speed range R1 in which the temperature Wt of the engine cooling water detected by the water temperature sensor 67 is lower than the preset cylinder temperature Wt1. With this arrangement, the fuel evaporability is improved by the impulse charged by the rotary valve 50 at engine cold-start at which both the fuel evaporability and the combustion stability normally deteriorate. It is therefore possible to achieve high combustion stability at engine cold-start.

As previously discussed with reference to the flowchart of FIG. 16, the ECU 100 of the engine 10 of this embodiment is so programmed as to progressively retard the opening timing of the rotary valve 50 as the temperature Wt of the engine cooling water detected by the water temperature sensor 67 decreases. For this reason, it is possible to create a progressively larger negative pressure and increase the fuel evaporability in the cylinders 12A-12D as the detected cooling water temperature Wt decreases at engine cold-start in which it is necessary to increase the combustion stability. It is therefore possible to accelerate fuel vaporization and atomization and thereby improve the combustion stability during cold-start.

As previously discussed with reference to the graph of FIG. 12, the ECU 100 of the engine 10 of this embodiment is so programmed as to drive the rotary valve 50 up to a higher engine speed during cold-start of the rotary valve 50 than during warm-up in a controlled fashion. Thus, the rotary valve 50 charges the impulse up to a relatively higher engine speed during cold-start at which the engine 10 exhibits poor combustion stability. This arrangement of the embodiment serves to accelerate fuel vaporization and atomization and thereby improve the combustion stability over a wide operating range of the engine 10.

Also, the ECU 100 of the engine 10 of this embodiment is so programmed as to operate the rotary valve 50 when the engine speed N is at the idle speed range during warm-up at which the detected temperature Wt of the engine cooling water is higher than the preset cylinder temperature Wt1. This arrangement of the embodiment makes it possible to increase flow speed of intake the air during idle operation during warm-up at which it is necessary to increase the combustion stability as the rotary valve 50 charges the impulse. Consequently, the fuel is forced into the cylinders 12A-12D by the fast intake flow, thereby accelerating fuel vaporization and atomization and improving the fuel-air mixability.

Also, as previously discussed with reference to FIGS. 14A and 14B, the ECU 100 of the engine 10 of this embodiment is programmed to control the engine 10 such that the fuel injectors 21 inject the fuel in the early part of each intake stroke before the rotary valve 50 opens when the engine 10 is during cold-start and at about the opening timing of the rotary valve 50 when the engine 10 runs during warm-up. Therefore, at engine cold-start in which it is necessary to increase the fuel evaporability, it is possible to inject the fuel at a time when the cylinder pressure is high, or in the early part of each intake stroke before the rotary valve 50 opens, thereby accelerating fuel vaporization and atomization by the impulse charged by the rotary valve 50. In the engine warm-up, the fuel injectors 21 inject the fuel at about the opening timing of the rotary valve 50, that is, immediately before the impulse is charged, so that the fuel is forced into the cylinders 12A-12D by the fast flow of intake the air. Consequently, the fuel is efficiently introduced into the cylinders 12A-12D and well mixed with fresh the air, so that the fuel-air mixability is improved and the fresh the air is cooled by absorption of the latent heat by vaporization of the fuel. Accordingly, even when the air/fuel ratio is increased to enrich the mixture under high-load conditions, it is possible to prevent the fuel from adhering to the walls of the intake ducts and enhance the knocking avoidance effect achieved by the latent heat absorption. It is therefore possible to control fuel injection in a desirable manner according to engine temperature in the present embodiment.

Also, as previously discussed with reference to FIG. 13, the ECU 100 of the engine 10 of this embodiment is so programmed as to control the rotary valve advance mechanism 56 such that the opening timing of the rotary valve 50 is progressively advanced as the engine load approaches a threshold of the medium-load region from the low-load region. As the engine load approaches the threshold (which corresponds to one of the torques τ1 and τ2) for the medium-load region, the opening timing of the rotary valve 50 approaches the opening timing of the intake valves 19 in this embodiment, so that the impulse charged by the rotary valve 50 becomes progressively weaker, making it possible to reduce pumping loss and improve fuel economy on a higher load side within the low-load region.

Additionally, as previously discussed with reference also to FIG. 13, the ECU 100 of the engine 10 of this embodiment is so programmed as to control the rotary valve advance mechanism 56 such that the opening timing of the rotary valve 50 is progressively retarded as the engine load approaches the wide open throttle at the high-load region. As the engine 10 transfers to the higher load side where a higher engine output is required, the opening timing of the rotary valve 50 goes away from the opening timing of the intake valves 19 in this embodiment, so that the impulse charged by the rotary valve 50 becomes progressively stronger, making it possible to develop an increased engine output on a higher load side within the high-load region.

Furthermore, the engine 10 of the present embodiment is provided with the variable induction system 60 which includes the volume channel 61 disposed downstream of the rotary valve 50, the volume channel 61 constituting the interconnection passageway for interconnecting the individual branching intake ducts 43A-43D, and the VIS valves 63 serving as the valve mechanism for connecting and disconnecting the volume channel 61 to and from the branching intake ducts 43A-43D under the control of the ECU 100. This arrangement of the embodiment makes it possible to attenuate the impulse charged by the rotary valve 50 and substantially deactivate the rotary valve 50 with the rotary valve 50 rotating as the ECU 100 can activate and deactivate the rotary valve 50 by opening the VIS valves 63 to connect the volume channel 61 to the branching intake ducts 43A-43D while rotating the rotary valve 50.

The aforementioned interconnection passageway (the volume channel 61) for interconnecting the individual branching intake ducts 43A-43D can be modified in various ways.

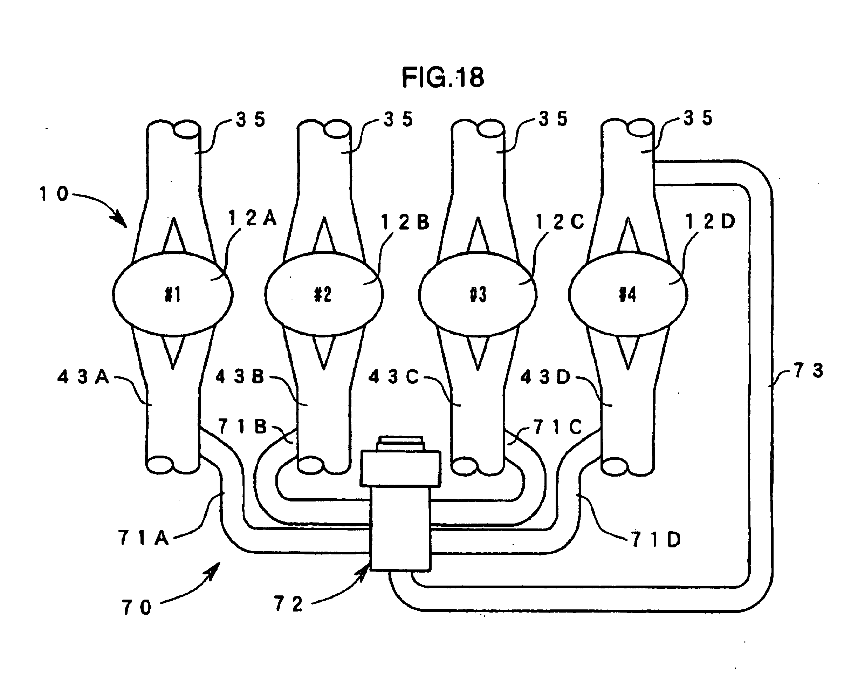

A four-cycle multi-cylinder spark ignition engine 10 according to a third embodiment of the present invention is now described. FIG. 18 is an enlarged fragmentary view showing a principal part of the engine 10 of the third embodiment.

Referring to FIG. 18, the engine 10 of the present embodiment is provided with an EGR system 70 which constitutes interconnection passageways. The EGR system 70 of this embodiment includes an EGR valve 72 interconnecting EGR channels 71A-71D which are connected to the branching intake ducts 43A-43D, respectively, the EGR valve 72 being connected to inlets of the individual EGR channels 71A-71D, and a recirculating Channel 73 which connects the EGR valve 72 to one of exhaust channels 35. In this embodiment, the EGR channels 71A-71D serve as the interconnection passageways and the EGR valve 72 serves as a valve mechanism for on/off flow control of the EGR channels 71A-71D serving as the interconnection passageways.

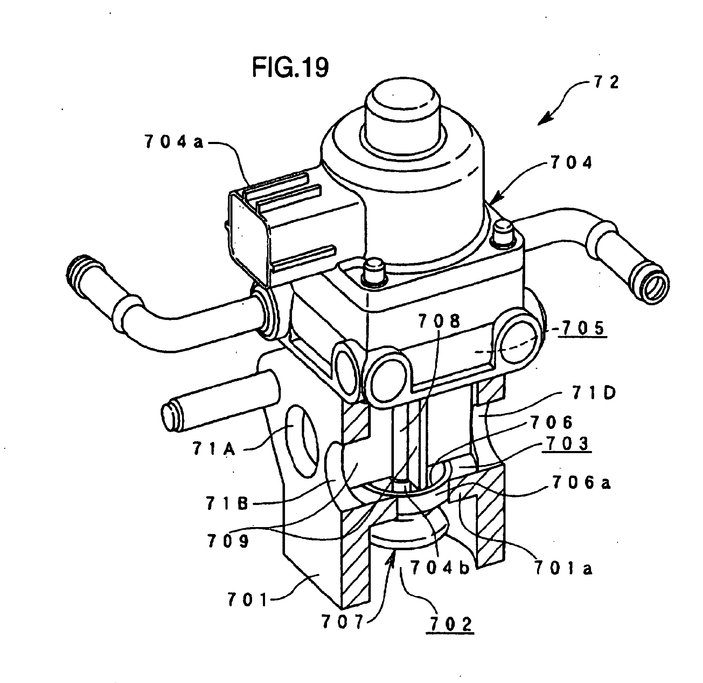

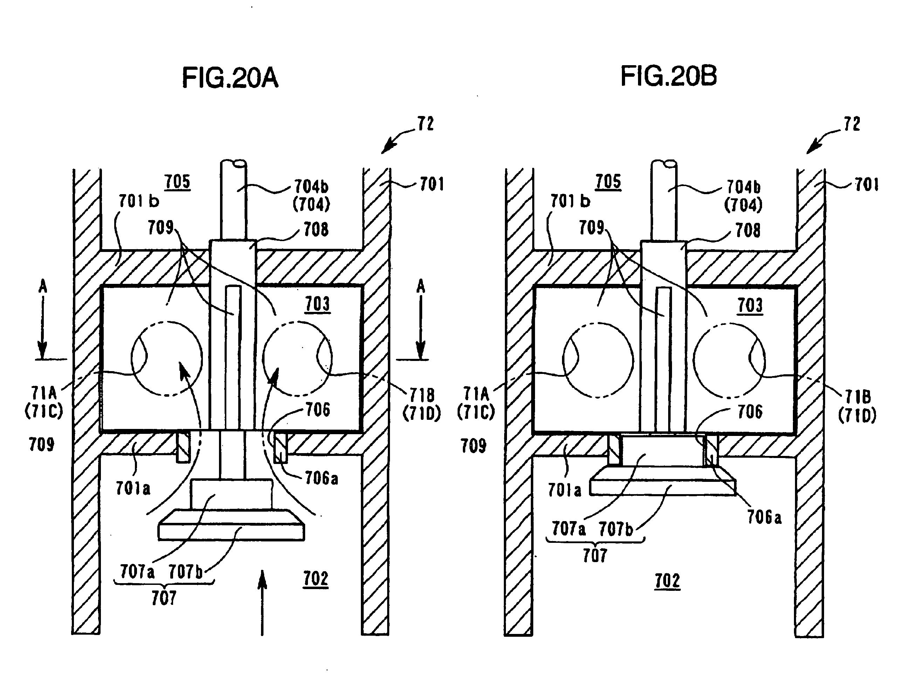

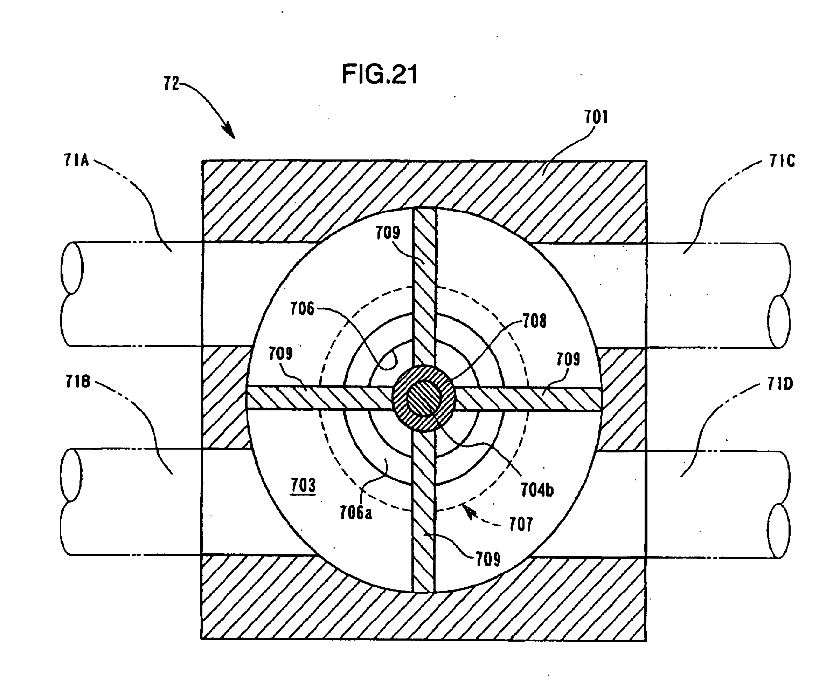

FIG. 19 is a partially cutaway perspective view showing a specific construction of the EGR valve 72 of the third embodiment, FIGS. 20A and 20B are enlarged fragmentary cross-sectional views showing operation of the EGR valve 72, and FIG. 21 is a cross-sectional view of the EGR valve 72 taken along lines A-A of FIG. 20A.

Referring to these Figures, the EGR valve 72 includes a housing 701 which is a generally boxlike hollow metal component of which lower part is separated by a pair of partition plates 701a, 701b into an inlet chamber 702 to which the recirculating channel 73 is connected, an outlet chamber 703 to which the individual EGR channels 71A-71D are connected, and a mechanism accommodation chamber 705 accommodating part of a valve actuating mechanism 704 is accommodated.

The valve actuating mechanism 704 includes an unillustrated solenoid actuator which is powered through a connector 704a, a rod 704b which extends down into the inlet chamber 702 while actuated up and down, an switching valve 707 mounted at a lower end of the rod 704b which alternately opens and closes an interconnection passage 706 formed in the partition plate 701a separating the inlet chamber 702 and the outlet chamber 703 from each other, and an unillustrated spring for biasing the rod 704b in a direction in which the switching valve 707 closes the interconnection passage 706. Since this spring exerts a biasing force on the switching valve 707 in its closing direction, the interconnection passage 706 is held closed by the switching valve 707 so that EGR is kept from being introduced into the EGR channels 71A-71D through the recirculating channel 73 while the solenoid actuator is not energized. While the solenoid actuator is energized, on the other hand, the solenoid actuator lifts the rod 704b and opens the interconnection passage 706 overwhelming the biasing force exerted by the spring, so that EGR is admitted into the EGR channels 71A-71D through the recirculating channel 73.

In this embodiment, the interconnection passage 706 is circumscribed by a circular seal ring 706a which is fitted in the partition plate 701a at a central position thereof. The switching valve 707 includes in a single structure a column portion 707a which is fitted in the seal ring 706a and a seal portion 707b which is formed at a bottom end of the column portion 707a and goes into contact with a bottom surface of the seal ring 706a, so that the switching valve 707 can tightly close the interconnection passage 706 as shown in FIG. 20B.

The EGR valve 72 further includes a guide sleeve 708 for guiding the rod 704b, the guide sleeve 708 extending vertically through the outlet chamber 703 and through the partition plate 701b which separates the mechanism accommodation chamber 705 and the outlet chamber 703 from each other. Further, four rectangular partition plates 709 are affixed to the guide sleeve 708 in such a manner that the partition plates 709 are equally spaced around the guide sleeve 708 to divide the outlet chamber 703 into four equal inner spaces. The individual EGR channels 71A-71D are connected to these four inner spaces of the outlet chamber 703 divided by the partition plates 709. Therefore, as is apparent from FIGS. 20A and 20B, the exhaust gas is recycled to the four equally divided inner spaces of the outlet chamber 703 through the interconnection passage 706 and fed into the individual EGR channels 71A-71D when the interconnection passage 706 is held open by the switching valve 707, whereas the four inner spaces of the outlet chamber 703 are individually sealed off when the interconnection passage 706 is held closed by the switching valve 707 with the column portion 707a of the switching valve 707 fitted in the seal ring 706a. With this arrangement, the individual EGR channels 71A-71D work as small-capacity passageway which are isolated from one another.

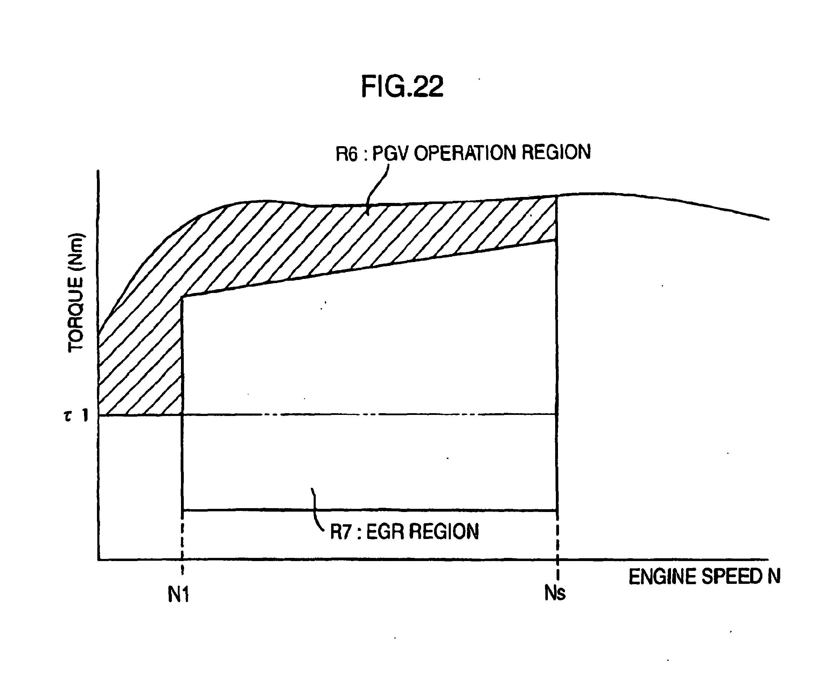

FIG. 22 is a graph showing an example of a relationship between the engine torque and the engine speed obtained when the EGR system 70 shown in FIGS. 18 to 21 is used.

In the engine 10 of the present embodiment provided with the EGR system 70 shown in FIGS. 18 to 21, a PGV operating range R6 in which the rotary valve 50 is operated and an EGR operating range R7 in which the EGR system 70 is operated are programmed in the ECU 100 as shown in FIG. 22.

The PGV operating range R6 programmed in the ECU 100 is shown by shading in FIG. 22. In the example of FIG. 22, it is possible to deactivate the rotary valve 50 to improve fuel economy or to stop the rotary valve 50 at a region at which it is difficult to charge the impulse on a lower load side where the engine load (torque) is less than a specified torque τ1 within a range at which the engine speed N is lower than a specified medium engine speed Ns. In a region where the engine load (torque) is at least the specified torque τ1, on the other hand, the ECU 100 operates the rotary valve 50 to charge the impulse to thereby achieving an improved volumetric efficiency and a desired engine torque. Additionally, the ECU 100 deactivates the rotary valve 50 also at a region at which it is difficult to charge the impulse within a range at which the engine speed N is at least the specified medium engine speed Ns.

The EGR operating range R7 is set to a range at which the engine speed N is between a specified low engine speed N1 and the aforementioned specified medium engine speed Ns and the engine torque is in a specified region. In this low-speed and medium-load region, priority is given to fuel economy and emissions characteristics of engine rather than to engine output. Thus, EGR is led to the branching intake ducts 43A-43D and the rotary valve 50 is substantially deactivated at the low-speed and medium-load region in this embodiment.

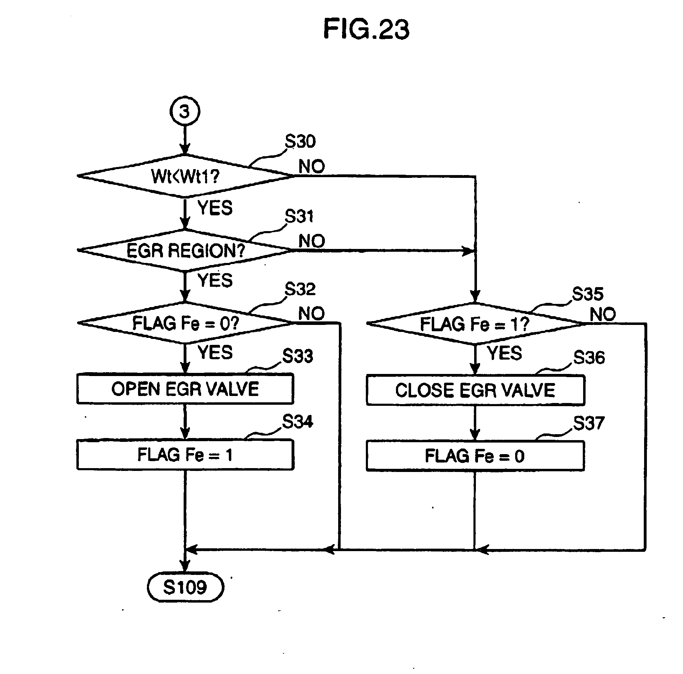

FIG. 23 is a flowchart showing the working of the engine 10 of the present embodiment provided with the EGR system 70 shown in FIGS. 18 to 21.

Operation flow of FIG. 23 is basically the same as that of FIGS. 15 to 17. If the engine 10 is judged to be currently not at the low-speed and low-load region in step S104 of FIG. 15, however, the ECU 100 proceeds to step S30 of FIG. 23, in which the ECU 100 compares the temperature Wt detected by the water temperature sensor 67 with the earlier-mentioned preset cylinder temperature Wt1 to judge whether the engine 10 is during cold-start. If the engine 10 is currently during cold-start (Wt<Wt1) in step S30, the ECU 100 judges whether the engine 10 is in the EGR operating range R7 shown in FIG. 22 (step S31). If the engine 10 is currently in the EGR operating range R7, the ECU 100 makes reference to a flag F by which the EGR valve 72 is actuated (step S32). A domain of the flag F offers a choice between two values, that is, "0" for closing the EGR valve 72 and "1" for opening the EGR valve 72. If the value of the flag F is "0" in step S32, the ECU 100 opens the EGR valve 72 (step S33). An arrangement used in this embodiment for interrupting operation of the rotary valve 50 in step S33 is to interconnect the individual branching intake ducts 43A-43D through the EGR channels 71A-71D by opening the EGR valve 72, rather than to directly control the rotary valve advance mechanism 56. This arrangement offers a quick response to the flag F compared to a case where the rotary valve 50 which exhibits great inertia and aerodynamic drag is directly stopped. With this arrangement of the embodiment, it is possible to cancel out the supercharging effect achieved by impulse charging by the rotary valve 50 and improve fuel economy in a timely fashion.

Subsequently, the ECU 100 switches the flag F to "1" (step S34). If the value of the flag F is "1" in step S32, the ECU 100 proceeds to step S109 of FIG. 16.

On the other hand, if the engine 10 is judged be cold-start in step S30 or not in the EGR operating range R7 in step S31, the ECU 100 judges whether the value of the flag F is "1'' (step S35). If the value of the flag F is "1", the ECU 100 causes the EGR valve 72 to close (step S36) and switches the flag F to "0" (step S37). Then, the ECU 100 proceeds to step S109 of FIG. 16. If the value of the flag F is "0", the ECU 100 proceeds directly to step S109 of FIG. 16.

In this embodiment, when the engine 10 is in a full-load operating range including a specific high-load region at an engine speed in which the rotary valve 50 is pre-programmed to operate (mainly in low- to medium-speed ranges), the ECU 100 closes the EGR valve 72, which serves as the valve mechanism similar to the VIS valves 63, to disconnect the volume channel 61 or the EGR channels 71A-71D serving as the interconnection passageway(s) from the individual branching intake ducts 43A-43D. As a result, the impulse charged by the rotary valve 50 propagates into the cylinders 12A-12D so that cylinder vaporization of the fuel is accelerated and the volumetric efficiency is improved, making it possible to obtain a high engine torque. In the part-load region, on the other hand, the ECU 100 opens the VIS valves 63 or the EGR valve 72 to connect the volume channel 61 or the EGR channels 71A-71D to the individual branching intake ducts 43A-43D and, thus, the impulse charged by the rotary valve 50 propagates to the individual cylinders 12A-12D by way of the interconnection passageway(s) so that the air pressure impulse charged by the rotary valve 50 attenuate. Since the rotary valve 50 is substantially deactivated in this case, it is possible to quickly reduce pumping loss and improve fuel economy.

Especially in the third embodiment illustrated in FIGS. 18 to 21, the engine 10 is provided with the EGR system 70 for EGR from one of the exhaust channels 35 back to the individual cylinders 12A-12D under the control of the ECU 100. The aforementioned interconnection passageways are made of the EGR channels 71A-71D of the EGR system 70 and the ECU 100 controls the EGR system 70 to recycle the exhaust gas through the branching intake ducts 43A-43D at the part-load region. In the EGR operating range R7 in which priority is given to fuel economy rather than to an improvement in the volumetric efficiency (and therefore in engine torque) by the rotary valve 50 in this embodiment, the rotary valve 50 is substantially deactivated and the EGR system 70 is operated, making it possible to reduce pumping loss and improve emission characteristics by EGR.

In this embodiment, the VIS valves 63 or the EGR valve 72 also disconnects those of the cylinders 12A-12D in which combustion sequence is in immediate one another when the volume channel 61 or the EGR channels 71A-71D are shut off, respectively. Thus, when the VIS valves 63 or the EGR valve 72 closes the interconnection passageway(s), none of the cylinders 12A-12D each intake stroke is connected to any of the cylinders 12A-12D of which intake valve 19 is open in this embodiment. For this reason, none of the cylinders 12A-12D currently on the intake stroke is connected to any of the cylinders 12A-12D of which intake valve 19 is open, causing attenuation of the impulse charged by the rotary valve 50, when the engine 10 is in an operating range in which the rotary valve 50 should be kept activated. This arrangement of the embodiment improves the volumetric efficiency by operating the rotary valve 50 in a reliable fashion when the VIS valves 63 or the EGR valve 72 is closed.

In particular, the aforementioned interconnection passageways of the third embodiment are made of the EGR channels 71A-71D of the EGR system 70 for EGR from one of the exhaust channels 35 back to the individual cylinders 12A-12D under the control of the ECU 100, and the ECU 100 operates the EGR system 70 in such a way as to recycle the exhaust gas through the branching intake ducts 43A-43D at the part-load region. In the EGR operating range R7 in which priority is given to fuel economy rather than to an improvement in the volumetric efficiency (and therefore in engine torque) by the rotary valve 50 in this embodiment, the rotary valve 50 is substantially deactivated and the EGR system 70 is operated, making it possible to reduce pumping loss and improve emission characteristics by EGR. Additionally, in the operating range in which the rotary valve 50 should be kept activated (i.e., the PGV operating range R6 shown in FIG. 22), the exhaust gas is recycled to none of the cylinders 12A-12D each intake stroke and therefore, it is possible to achieve an improvement in the volumetric efficiency in a reliable fashion when the VIS valves 63 or the EGR valve 72 is closed.

Furthermore, the aforementioned interconnection passageways are made of the separate EGR channels 71A-71D which are connected to the respective branching intake ducts 43A-43D and the EGR valve 72 is a single valve which alternately opens and closes the inlets of the individual EGR channels 71A-71D in this embodiment. Therefore, the individual EGR channels 71A-71D work as small-capacity passageway which are isolated from one another, making it possible to prevent the occurrence of pulsation among the individual cylinders 12A-12D.

Although the present invention has been described in terms of specific exemplary embodiments, it will be appreciated that various changes and modifications may be made by those skilled in the art without departing from the scope of the present invention, as defined in the following claims.

## Claims

1. A control apparatus of a multi-cylinder engine (10) which is provided with:
intake ducts (43A-43D) which supply the air through individual intake ports (17) to a plurality of cylinders (12A-12D);
a collection member (42) to which inlets of the branching ducts (43A-43D) are collected to be in fluid communication with each other;
an impulse charger (50) which charges the impulse in each cylinder (12A-12D) at halfway points in each intake stroke during each intake valve is opening the corresponding intake port (17),
engine speed detecting means (66) which detects engine speed;
engine load detecting means (68) which detects engine load conditions;
an interconnection passageway (61) which is positioned at a downstream of the impulse charger (50) and is so connected as to interconnect with the intake ducts (43A-43D) with each other;
a valve mechanism (63) which alternately opens and closes a joint channel (62) which interconnects the interconnection passageway (61) with the intake ducts (43A-43D); and
a control means (100) which controls operation of the impulse charger (50) and on and off operation of the valve mechanism (63) based on detections by the engine speed and the engine load sensors (66) (68),
wherein the control means (100) closes the valve mechanism (63) to disconnect the interconnection passageway (61) from the intake ducts (43A-43D) when the engine (10) is in a high-load region and opens the valve mechanism (63) to interconnect the interconnection passageway (61) with the intake ducts (43A-43D) when the engine (10) is in a part-load region under engine driving conditions where a range of engine speed is a level at which the impulse charger is pre-programmed to be operated,
**characterized in that**
an intake duct length (Lf) from an outlet of the corresponding intake port (17) to the interconnection passageway (61) is set to a length which is determined by the intake duct volume defined by each intake passage (PH21-24) from outlet of the corresponding intake port (17) to the interconnection passageway (61) and a single-displaced cylinder volume so that a natural frequency of air intake system is tuned to resonate at a high-speed range at which engine speed reaches at least first specified engine speed in order to achieve the inertial supercharging effect which enhances the volumetric efficiency within the high-speed range, and
an intake duct length (Ls) from an outlet of the corresponding intake port (17) to the collection member (42) is set to a length which is determined by the intake duct volume defined by each intake passage (PH11-14) from outlet of the corresponding intake port (17) to the collection member (42) and a single-displaced cylinder volume so that a natural frequency of air intake system is tuned to resonate at an medium-speed range at which engine speed is at most the- first specified engine speed in order to achieve the inertial supercharging effect which enhances the volumetric efficiency at the medium-speed range,
wherein the control means (100) controls the valve mechanism (63, 72) to connect the interconnection passageway (61) to the intake ducts (43A-43D) at an engine speed at least the first specified engine speed and to hold the impulse charger (50) activated in an operating range at most the second specified engine speed,and
the control means (100) holds the impulse charger (50) deactivated in an operating range at least the second specified engine speed.

2. The control apparatus of the multi-cylinder engine (10) according to claim 1 which further provided with:
an EGR system (70) by which a fraction of engine exhaust gas is recycled from an exhaust channel (35) to each cylinder (12A-12D) each cycle under the control of the control means (100),
wherein the interconnection passageway is constituted of EGR channel (71 A-71D) of the EGR system (70), and the control means (100) operates the EGR system (70) to recycle exhaust through the intake ducts (43A-43D) when the engine is at the part-load region.

3. The control apparatus of the multi-cylinder engine (10) according to claim 2, wherein the EGR channel is a plurality of separate EGR channels (71A-71D) connected to the branching ducts (43A-43D), and the valve mechanism is a single EGR valve (72) which alternately opens and closes inlets of the separate EGR channels (71A-71D) at the same time.

4. The control apparatus of the multi-cylinder engine (10) according to one of claims 1 to 3,
wherein, when the interconnection passageway is closed, the valve mechanism (63, 72) also disconnects those cylinders (12A-12D) from each other in which combustion sequence is in immediate one another.

5. The control apparatus of the multi-cylinder engine (10) according to one of claims 1 to 4,
wherein the impulse charger comprises a rotary valve (50) which is accommodated within the collection member (42) and rotates in synchronism with a crankshaft (3).

6. The control apparatus of the multi-cylinder engine (10) according to claim 5, wherein outer diameter of the rotary valve (50) is set larger than opening size of the each intake duct (43A-43D), the inlets of the branching ducts (43A-43D) are arranged to face openings (52 and 53) formed in a outer curving wall of the rotary valve (50) so as to selectively on and off the air flows through the corresponding openings (52 and 53), and the percent of single intake duct volume, which is measured from an outlet of the corresponding intake port (17) to one of the corresponding openings (52 and 53) in the rotary valve (50), is set within a range of 70% to 130% of single-displaced cylinder volume.

7. The control apparatus of the multi-cylinder engine (10) according to any one of the preceding claims,
wherein the control means (100) causes the valve mechanism (63) to open the joint channel (62) to be in fluid communication the interconnection passageway (61) with the intake ducts (43A-43D) at the part-load region despite the engine speed is at most the second specified engine speed.

8. The control apparatus of the multi-cylinder engine (10) according to any one of the preceding claims,
wherein the impulse charger (50) includes a variable impulse charge timing mechanism which is capable of varying a valve opening timing, and the control means (100) controls the variable impulse charge timing mechanism in such a manner that the further the engine speed approaches the second specified engine speed, the more the impulse charger (50) would advance the impulse charging timing.

## Patentansprüche

1. Steuervorrichtung einer Mehrzylinderbrennkraftmaschine (10), die versehen ist mit:
Einlasskanälen (43A - 43D), die durch einzelne Einlassöffnungen (17) die Luft an mehrere Zylinder (12A - 12D) liefern;
ein Sammelelement (42), an dem sich Einlässe der Verzweigungskanäle (43A - 43D) sammeln, um in einer Fluidverbindung miteinander zu stehen;
ein Impulsladegerät (50), das den Impuls in jedem Zylinder (12A- 12D) an Punkten auf halbem Weg in jedem Ansaugtakt auflädt, während jedes Einlassventil (19) die entsprechende Einlassöffnung (17) öffnet;
ein Motordrehzahlerfassungsmittel (66), das eine Motordrehzahl erfasst;
ein Motorlasterfassungsmittel (68), das Motorlastzustände erfasst;
einen Verbindungsdurchgang (61), der stromabwärtig von dem Impulsladegerät (50) positioniert ist, und derart verbunden ist, dass er die Einlasskanäle (43A - 43D) miteinander verbindet;
einen Ventilmechanismus (63), der einen Vereinigungskanal (62), der den Verbindungsdurchgang (61) mit den Einlasskanälen (43A - 43D) verbindet, abwechselnd öffnet und schließt; und
ein Steuermittel (100), das den Betrieb des Impulsladegeräts (50) basierend auf Erfassungen durch die Motordrehzahl- und Motorlastsensoren (66) (68) ein und aus steuert,
wobei das Steuermittel (100) den Ventilmechanismus (63) schließt, um den Verbindungsdurchgang (61) von den Einlasskanälen (43A - 43D) zu trennen, wenn der Motor (10) in einem Hochlastbereich ist, und den Ventilmechanismus (63) öffnet, um den Verbindungsdurchgang (61) mit den Einlasskanälen (43A - 43D) zu verbinden, wenn der Motor (10) unter Motorantriebsbedingungen, in denen ein Motordrehzahlbereich auf einem Pegel ist, für dessen Betrieb das Impulsladegerät vorprogrammiert ist, in einem Teillastbereich ist,
**dadurch gekennzeichnet, dass**
die Einlasskanallänge (Lf) von einem Auslass der entsprechenden Einlassöffnung (17) zu dem Verbindungsdurchgang (61) auf eine Länge festgelegt ist, die durch das Einlasskanalvolumen bestimmt ist, das von jedem Einlassdurchgang (PH21 - 24) von dem Auslass der entsprechenden Einlassöffnung (17) zu dem Verbindungsdurchgang (61) und ein einzelnes Zylinderverdrängungsvolumen definiert ist, so dass eine natürliche Frequenz des Lufteinlasssystems abgestimmt wird, um in einem Hochdrehzahlbereich, in dem die Motordrehzahl wenigstens eine erste spezifizierte Motordrehzahl erreicht, zu schwingen, um den trägen Aufladungseffekt zu erzielen, der den Liefergrad in dem Hochdrehzahlbereich verbessert, und
die Einlasskanallänge (Ls) von einem Auslass der entsprechenden Einlassöffnung (17) zu dem Sammelelement (42) auf eine Länge festgelegt ist, die durch das Einlasskanalvolumen bestimmt ist, das von jedem Einlassdurchgang (PH11 - 14) von dem Auslass der entsprechenden Einlassöffnung (17) zu der Sammelkammer (42) und ein einzelnes Zylinderverdrängungsvolumen definiert ist, so dass eine natürliche Frequenz des Lufteinlasssystems abgestimmt wird, um in einem mittleren Drehzahlbereich, in dem die Motordrehzahl höchstens die erste spezifizierte Motordrehzahl hat, zu schwingen, um den trägen Aufladungseffekt zu erzielen, der den Liefergrad in dem mittleren Drehzahlbereich verbessert,
wobei das Steuermittel (100) den Ventilmechanismus (63, 72) steuert, um den Verbindungsdurchgang (61) bei einer Motordrehzahl von wenigstens der ersten spezifizierten Motordrehzahl mit den Einlasskanälen (43A - 43D) zu verbinden und das Impulsladegerät (50) in einem Arbeitsbereich bei höchstens der zweiten spezifizierten Motordrehzahl aktiviert zu halten, und
das Steuermittel (100) das Impulsladegerät (50) in einem Arbeitsbereich wenigstens bei der zweiten spezifizierten Motordrehzahl deaktiviert hält.

2. Steuervorrichtung der Mehrzylinderbrennkraftmaschine (10) nach Anspruch 1, die ferner versehen ist mit:
einem Abgasrückführsystem (70), durch das unter der Steuerung des Steuermittels (100) ein Bruchteil von Motorabgas von einem Abgaskanal (35) zu jedem Zylinder (12A - 12D) rückgewonnen wird,
wobei der Verbindungsdurchgang aus einem Abgasrückführungskanal (71A - 71D) des Abgasrückführsystems (70) gebildet ist und das Steuermittel (100) das Abgasrückführsystem (70) betreibt, um Abgas durch die Einlasskanäle (43A - 43D) rückzugewinnen, wenn der Motor in dem Teillastbereich ist.

3. Steuervorrichtung einer Mehrzylinderbrennkraftmaschine (10) nach Anspruch 2,
wobei der Abgasrückführungskanal mehrere getrennte Abgasrückführungskanäle (71A - 71D) ist, die mit den Verzweigungskanälen (43A - 43D) verbunden sind, und der Ventilmechanismus ein einzelnes Abgasrückführventil (72) ist, das die Einlässe der getrennten Abgasrückführungskanäle (71A - 71D) abwechselnd gleichzeitig öffnet und schließt.

4. Steuervorrichtung einer Mehrzylinderbrennkraftmaschine (10) nach einem der Ansprüche 1 bis 3,
wobei der Ventilmechanismus (63, 72) auch die Zylinder (12A - 12D) voneinander trennt, in denen die Verbrennungsabfolge unmittelbar aufeinander ist, trennt.

5. Steuervorrichtung einer Mehrzylinderbrennkraftmaschine (10) nach einem der Ansprüche 1 bis 4,
wobei das Impulsladegerät einen Drehschieber (50) hat, der in der Sammelkammer (42) untergebracht ist und synchron mit einer Kurbelwelle (3) rotiert.

6. Steuervorrichtung der Mehrzylinderbrennkraftmaschine (10) nach Anspruch 5,
wobei der Außendurchmesser des Drehschiebers (50) größer festgelegt ist als die Öffnungsgröße jedes Einlasskanals (43A - 43D), wobei die Einlässe der Verzweigungskanäle (43A - 43D) derart angeordnet sind, dass sie Öffnungen (52 und 53) zugewandt sind, die in einer äußeren gekrümmten Wand des Drehschiebers (50) ausgebildet sind, um die Luftströme durch die entsprechenden Öffnungen (52 und 53) selektiv ein und aus zu schalten, und wobei der Prozentsatz des einfachen Einlasskanalvolumens, das von einem Auslass der entsprechenden Einlassöffnung (17) zu einer der entsprechenden Öffnungen (52 und 53) in dem Drehschieber (50) gemessen ist, innerhalb eines Bereichs von 70% bis 130% des einfachen Zylinderverdrängungsvolumens festgelegt ist.

7. Steuervorrichtung der Mehrzylinderbrennkraftmaschine (10) nach einem der vorhergehenden Ansprüche,
wobei das Steuermittel (100) bewirkt, dass der Ventilmechanismus (63) in dem Teillastbereich den Vereinigungskanal (62) öffnet, damit der Verbindungsdurchgang (61) in Fluidverbindung mit den Einlasskanälen (43A - 43D) ist, obwohl die Motordrehzahl höchstens die zweite spezifizierte Motordrehzahl ist.

8. Steuervorrichtung der Mehrzylinderbrennkraftmaschine (10) nach einem der vorhergehenden Ansprüche,
wobei das lmpulsladegerät (50) einen variablen Impulsladezeitsteuerungsmechanismus umfasst, der fähig ist, einen Ventilöffnungszeitablauf zu variieren, und das Steuermittel (100) den variablen Impulsladezeitsteuerungsmechanismus in einer derartigen Weise steuert, dass die Motordrehzahl sich der zweiten spezifizierten Motordrehzahl nähert, je weiter das Impulsladegerät (50) den Impulsladezeitablauf vorrückt.

## Revendications

1. Dispositif de contrôle d'un moteur multicylindre (10) qui est pourvu de :
conduits d'admission (43A-43D) qui fournissent l'air à travers des orifices d'admission individuels (17) à une pluralité de cylindres (12A-12D) ;
un élément d'assemblage (42) auquel des entrées des conduits de dérivation (43A-43D) sont assemblées pour être en communication fluidique les unes avec les autres;
un chargeur d'impulsion (50) qui charge l'impulsion dans chaque cylindre (12A-12D) à des points à mi-chemin dans chaque course d'admission au cours de laquelle chaque soupape d'admission ouvre l'orifice d'admission correspondant (17),
un moyen de détection de la vitesse du moteur (66) qui détecte la vitesse du moteur ;
un moyen de détection de la charge du moteur (68) qui détecte les conditions de charge du moteur ;
un passage d'interconnexion (61) qui est positionné en aval du chargeur d'impulsion (50) et est ainsi connecté de manière à interconnecter les conduits d'admission (43A-43D) les uns avec les autres ;
un mécanisme de soupape (63) qui ouvre et ferme en alternance un canal commun (62) qui interconnecte le passage d'interconnexion (61) avec les conduits d'admission (43A-43D) ; et
un moyen de contrôle (100) qui contrôle l'opération du chargeur d'impulsion (50) et l'opération d'allumage et d'extinction du mécanisme de soupape (63) en fonction des détections par les capteurs de la vitesse du moteur et de la charge du moteur (66) (68),
dans lequel le moyen de contrôle (100) ferme le mécanisme de soupape (63) pour déconnecter le passage d'interconnexion (61) des conduits d'admission (43A-43D) lorsque le moteur (10) est dans une région de forte charge et ouvre le mécanisme de soupape (63) pour interconnecter le passage d'interconnexion (61) avec les conduits d'admission (43A-43D) lorsque le moteur (10) est dans une région de charge partielle dans des conditions de conduite du moteur où une plage de vitesse du moteur est un niveau auquel le chargeur d'impulsion est préprogrammé pour être opéré,
**caractérisé en ce que**
une longueur de conduit d'admission (Lf) depuis une sortie de l'orifice d'admission correspondant (17) jusqu'au passage d'interconnexion (61) est réglée sur une longueur qui est déterminée par le volume de conduit d'admission défini par chaque passage d'admission (PH21-24) depuis la sortie de l'orifice d'admission correspondant (17) jusqu'au passage d'interconnexion (61) et un volume de cylindre à déplacement unique de sorte qu'une fréquence naturelle du système d'admission d'air est réglée pour résonner à une plage de vitesse élevée à laquelle la vitesse du moteur atteint au moins une première vitesse du moteur spécifiée afin d'obtenir l'effet de suralimentation inertielle qui amplifie l'efficacité volumétrique au sein de la plage de vitesse élevée, et
une longueur de conduit d'admission (Ls) depuis une sortie de l'orifice d'admission correspondant (17) jusqu'à l'élément d'assemblage (42) est réglée sur une longueur qui est déterminée par le volume de conduit d'admission défini par chaque passage d'admission (PH11-14) depuis la sortie de l'orifice d'admission correspondant (17) jusqu'à l'élément d'assemblage (42) et un volume de cylindre à déplacement unique de sorte qu'une fréquence naturelle du système d'admission d'air est réglée pour résonner à une plage de vitesse moyenne à laquelle la vitesse du moteur est d'au plus la première vitesse du moteur spécifiée afin d'obtenir l'effet de suralimentation inertielle qui amplifie l'efficacité volumétrique au sein de la plage de vitesse moyenne,
dans lequel le moyen de contrôle (100) contrôle le mécanisme de soupape (63, 72) pour connecter le passage d'interconnexion (61) aux conduits d'admission (43A-43D) à une vitesse du moteur d'au moins la première vitesse du moteur spécifiée et pour maintenir le chargeur d'impulsion (50) activé dans une plage de fonctionnement d'au plus la seconde vitesse du moteur spécifiée, et
le moyen de contrôle (100) maintient le chargeur d'impulsion (50) désactivé dans une plage de fonctionnement d'au moins la seconde vitesse du moteur spécifiée.

2. Dispositif de contrôle du moteur multicylindre (10) selon la revendication 1, qui est en outre pourvu de :
un système de recirculation des gaz d'échappement (70) par lequel une fraction des gaz d'échappement du moteur est recyclée depuis un canal d'échappement (35) vers chaque cylindre (12A-12D) à chaque cycle sous le contrôle du moyen de contrôle (100),
dans lequel le passage d'interconnexion est constitué d'un canal de recirculation des gaz d'échappement (71A-71D) du système de recirculation des gaz d'échappement (70), et le moyen de contrôle (100) opère le système de recirculation des gaz d'échappement (70) pour recycler les gaz d'échappement à travers les conduits d'admission (43A-43D) lorsque le moteur est au niveau de la région de charge partielle.

3. Dispositif de contrôle du moteur multicylindre (10) selon la revendication 2, dans lequel le canal de recirculation des gaz d'échappement est une pluralité de canaux de recirculation des gaz d'échappement séparés (71A-71D) connectés aux conduits de dérivation (43A-43D), et le mécanisme de soupape est une soupape de recirculation des gaz d'échappement unique (72) qui ouvre et ferme en alternance des entrées des canaux de recirculation des gaz d'échappement séparés (71A-71D) en même temps.

4. Dispositif de contrôle du moteur multicylindre (10) selon l'une quelconque des revendications 1 à 3,
dans lequel, lorsque le passage d'interconnexion est fermé, le mécanisme de soupape (63, 72) déconnecte également les cylindres (12A-12D) les uns des autres dans lesquels la séquence de combustion est immédiatement l'un après l'autre.

5. Dispositif de contrôle du moteur multicylindre (10) selon l'une quelconque des revendications 1 à 4,
dans lequel le chargeur d'impulsion a une valve rotative (50) qui est logée au sein de l'élément d'assemblage (42) et tourne en synchronisme avec un vilebrequin (3).

6. Dispositif de contrôle du moteur multicylindre (10) selon la revendication 5, dans lequel le diamètre externe de la valve rotative (50) est réglé plus grand que la taille d'ouverture de chaque conduit d'admission (43A-43D), les entrées des conduits de dérivation (43A-43D) sont agencées pour faire face aux ouvertures (52 et 53) formées dans une paroi à courbure externe de la valve rotative (50) de manière à allumer et éteindre sélectivement les écoulements d'air à travers les ouvertures correspondantes (52 et 53), et le pourcentage de volume de conduit d'admission unique, qui est mesuré depuis une sortie de l'orifice d'admission correspondant (17) jusqu'à une des ouvertures correspondantes (52 et 53) dans la valve rotative (50), est réglé au sein d'une plage de 70 % à 130 % de volume de cylindre à déplacement unique.

7. Dispositif de contrôle du moteur multicylindre (10) selon l'une quelconque des revendications précédentes,
dans lequel le moyen de contrôle (100) provoque l'ouverture par le mécanisme de soupape (63) du canal commun (62) pour mettre en communication fluidique le passage d'interconnexion (61) avec les conduits d'admission (43A-43D) au niveau de la région de charge partielle malgré le fait que la vitesse du moteur soit d'au plus la seconde vitesse du moteur spécifiée.

8. Dispositif de contrôle du moteur multicylindre (10) selon l'une quelconque des revendications précédentes,
dans lequel le chargeur d'impulsion (50) inclut un mécanisme de minuterie de charge d'impulsion variable qui est capable de faire varier un moment d'ouverture de soupape, et le moyen de contrôle (100) contrôle le mécanisme de minuterie de charge d'impulsion variable d'une manière telle que plus la vitesse du moteur s'approche de la seconde vitesse du moteur spécifiée, plus le chargeur d'impulsion (50) avance le moment de chargement d'impulsion.
